# EUROPÄISCHE PATENTSCHRIFT

(11) **EP 4 558 011 B1**
(45) Veröffentlichungstag und Bekanntmachung des Hinweises auf die Patenterteilung: **24.09.2025**
(21) Anmeldenummer: 23745048.1
(22) Anmeldetag: 06.07.2023
(51) Int. Cl.: A47B 88/90, F16B 12/08, F16B 17/00

(54) **SEITENZARGE IN FORM EINER BEHÄLTNISSEITENWAND, INSBESONDERE SCHUBLADENSEITENWAND**
SIDEWALL IN THE FORM OF A CONTAINER SIDEWALL, IN PARTICULAR A DRAWER SIDEWALL
PAROI LATÉRALE SOUS LA FORME D'UNE PAROI LATÉRALE DE CONTENEUR, EN PARTICULIER D'UNE PAROI LATÉRALE DE TIROIR

(30) Priorität: 21.07.2022 AT 505522022
(43) Veröffentlichungstag der Anmeldung: 28.05.2025
(73) Patentinhaber: Julius Blum GmbH, 6973 Höchst (AT)
(72) Erfinder: SPERGER, Gerald, 6971 Hard (AT); GMEINER, Claudio, 6861 Alberschwende (AT); RAFFEINER, Michael, 6971 Hard (AT)
(74) Vertreter: Torggler & Hofmann Patentanwälte - Innsbruck
(86) Internationale Anmeldenummer: PCT/AT2023/060220
(87) Internationale Veröffentlichungsnummer: WO 2024/016033

(56) Entgegenhaltungen:
- EP-A2- 1 932 448
- WO-A1-2012/142630

## Beschreibung

Die Erfindung betrifft eine Seitenzarge in Form einer Behältnisseitenwand, insbesondere Schubladenseitenwand, umfassend wenigstens einen Rückwandhalter und/oder wenigstens einen Frontwandhalter und ein, vorzugsweise einstückiges, gebogenes Blechprofil in Form eines Zargenhuts zur Aufnahme wenigstens eines Rückwandhalters und/oder wenigstens eines Frontwandhalters, wobei der wenigstens eine Rückwandhalter und/oder der wenigstens eine Frontwandhalter zumindest bereichsweise innerhalb des Blechprofils angeordnet ist. Des Weiteren betrifft die Erfindung eine Anordnung aus wenigstens einer Korpusschiene mit einem seitlichen Steg zur Verbindung der wenigstens einen Korpusschiene mit einem Möbelkorpus, wenigstens einer, insbesondere quaderförmigen, Ladenschiene mit einem im Gebrauchszustand der Anordnung im Wesentlichen parallel zu dem seitlichen Steg orientierten weiteren seitlichen Steg und wenigstens einer solchen Seitenzarge. Weiters betrifft die Erfindung ein Möbel, insbesondere Schublade, mit wenigstens einem Möbelkorpus und wenigstens einer solchen Seitenzarge. Die Erfindung betrifft weiters ein Verfahren zur Herstellung einer solchen Seitenzarge.

Eine solche Seitenzarge ist bereits aus dem Stand der Technik bekannt, in welcher ein Rückwandhalter mit einem Blechprofil zusammen mit einer Behältnisschiene verschraubt sind.

Nachteilig am Stand der Technik ist, dass die Verschraubung des Rückwandhalters zusätzliche Bauteilkomponenten erfordert und einen erhöhten Montageaufwand bedingt, wobei beispielsweise bei unsachgemäßer Befestigung der Schraubverbindung eine unerwünschte Kraftübertragung zwischen Rückwandhalter und Seitenzarge erfolgt und in einer reduzierten Standzeit der Seitenzarge resultieren kann. Darüber hinaus müssen Bohrungen am Blechteil vorgenommen werden, wobei aufgrund von Toleranzen die Gefahr von Spannungen innerhalb der Seitenzarge besteht und ein hohes Maß an Genauigkeit der Bohrungen am Blechteil erforderlich ist, um ein optisches Erscheinungsbild der Seitenzarge nicht zu mindern. Zudem bergen Schraubverbindung die Gefahr einer Kollision mit anderweitigen Bauteilkomponenten der Seitenzarge und erfordern Bauraum innerhalb der Seitenzarge. Eine feste Verbindung zwischen Rückwandhalter und Seitenzarge ist im Gebrauch der Seitenzarge jedoch essentiell.

Weitere Seitenzargen sind bereits aus den Schriften EP 1 932 448 A2 sowie WO 2012/142630 A1 bekannt.

Die objektive technische Aufgabe der vorliegenden Erfindung besteht daher darin, eine gegenüber dem Stand der Technik verbesserte Seitenzarge, eine Anordnung, ein Möbel sowie ein Verfahren zur Herstellung einer solchen Seitenzarge anzugeben, bei welchen die Nachteile des Stands der Technik zumindest teilweise behoben sind, und welche sich insbesondere durch einen effizienten Herstellungsprozess, einer reduzierten Anzahl an Bauteilkomponenten, einer kompakten Seitenzarge und/oder einer besonders festen Verbindung zwischen Rückwandhalter und/oder Frontwandhalter und Blechteil auszeichnen.

Diese Aufgabe wird durch die Merkmale des Anspruches 1 gelöst.

Es ist demnach erfindungsgemäß vorgesehen, dass das Blechprofil mit dem wenigstens einen Frontwandhalter und/oder mit dem wenigstens einen Rückwandhalter an zumindest einem Verbindungspunkt durch wenigstens eine Verhalsung verhalst ist.

Dadurch wird es erst ermöglicht, dass eine Schraub-, Niet-, Schweiß- oder Nagelverbindung - welche üblicherweise im Stand der Technik herangezogen wird - nicht erforderlich ist.

Durch die wenigstens eine Verhalsung kann ein Kraftschluss in Richtung der wenigstens einen Verhalsung - im Allgemeinen entlang einer Verhalsungsöffnung des wenigstens einen Rückwandhalters oder des wenigstens einen Frontwandhalters - und/oder ein Formschluss in orthogonaler Richtung dazu generiert werden.

Die wenigstens eine Verhalsung hat sich als besonders günstige Verbindung für die Seitenzarge erwiesen, wobei insbesondere bei einem metallischem Blechprofil und kunststoffartigem Frontwandhalter und/oder kunststoffartigem Rückwandhalter eine lagesichere relative Positionierung innerhalb des Blechprofils - ohne das Erfordernis von gesonderten Verbindungsmitteln oder Befestigungsmitteln - gewährleistet werden kann.

Im Allgemeinen wird bei der wenigstens einen Verhalsung ein Material des Blechprofils durch einen Stempel oder dergleichen an eine Öffnung - insbesondere Mantelfläche der Öffnung - des wenigstens einen Frontwandhalters und/oder des wenigstens einen Rückwandhalters über plastische Verformung angepresst. Das Blechprofil wird im Allgemeinen durch den Stempel durchbohrt, wobei dies nicht zwingend erforderlich ist.

Hinzu kommt die positive Eigenschaft, dass keine Behältnisschiene erforderlich ist, um eine hinreichende Stabilität der Seitenzarge zu erhöhen sowie eine Anbindung an eine Ladenschiene gewährleisten zu können.

Zudem ragen die Verhalsungen im Allgemeinen nicht aus dem Blechprofil hervor, sodass an einer Unterseite des Blechprofils eine plane Ebene erwirkt werden kann und/oder die Verhalsungen an der Seitenfläche des Blechprofils innerhalb einer Profilierung angeordnet werden können, sodass eine plane Ebene bedingt werden kann, welche durch einen Behältnisboden verdeckt werden kann.

Der Fachterminus Zargenhut ist derart auszulegen, dass dieser ein gebogenes Blechprofil zur Bildung einer Behältnisseitenwand definiert. Gebogen ist derart breit auszulegen, dass auch stoffschlüssig oder via Befestigungsmittel miteinander verbundene Blechteile abseits einer Behältnisschiene umfasst sind. Besonders bevorzugt ist das Blechprofil im Gebrauchszustand bereichsweise nach unten hin offen und/oder wird durch den wenigstens einen Frontwandhalter und/oder den wenigstens einen Rückwandhalter nach unten hin verschlossen.

Wie eingangs ausgeführt, wird Schutz auch begehrt für eine Anordnung aus wenigstens einer Korpusschiene mit einem seitlichen Steg zur Verbindung der wenigstens einen Korpusschiene mit einem Möbelkorpus, wenigstens einer, insbesondere quaderförmigen, Ladenschiene mit einem im Gebrauchszustand der Anordnung im Wesentlichen parallel zu dem seitlichen Steg orientierten weiteren seitlichen Steg und wenigstens einer solchen Seitenzarge, wobei die wenigstens eine Seitenzarge über die wenigstens eine Ladenschiene relativ zu der wenigstens einen Korpusschiene verschiebbar gelagert ist.

Im Allgemeinen kann zwischen der wenigstens einen Ladenschiene und der wenigstens einen Korpusschiene eine Mittelschiene für einen Vollauszug eines Behältnisses vorgesehen sein, wobei dies im Allgemeinen nicht erforderlich ist.

Der Gebrauchszustand der Anordnung kann durch die Lage der Anordnung an einem Möbelkorpus definiert sein, wobei im Gebrauchszustand die Anordnung derart vorbereitet ist, um einen Behältnisboden, eine Behältnisfront und/oder eine Behältnisrückwand ohne weitere Montageschritte (wie der Montage einer Behältnisschiene) an der Anordnung zur Bildung eines Behältnisses wie einer Schublade zu befestigen. Vertikal von oben definiert daher einen Freiheitsgrad orthogonal zu einer Längserstreckung der wenigstens einen Seitenzarge in Richtung der Schwerkraft auf eine Anlagefläche der wenigstens einen Ladenschiene für den Behältnisboden.

Besonders vorteilhaft ist bei der Anordnung die Kraftübertragung zwischen der wenigstens einen Ladenschiene und der wenigstens einen Seitenzarge und/oder innerhalb der wenigstens einen Seitenzarge. Im Stand der Technik wird unter Belastung der Anordnung eine Kraftübertragung über die zur Koppelung an der Ladenschiene und an der Seitenzarge angeordnete Behältnisschiene (auf welcher der Behältnisboden aufliegt) vermittelt, wodurch eine instabile mittelbare Verbindung bedingt ist. Bei der Anordnung kann durch den Verzicht der Behältnisschiene eine Anordnung mit erhöhter Festigkeit/Stabilität bereitgestellt werden, da ein Kraftfluss zwischen der wenigstens einen Ladenschiene und der wenigstens einen Seitenzarge (sowie innerhalb der wenigstens einen Seitenzarge) besonders begünstigt wird und insbesondere Verformungen wie Aufquellen, Verbiegen und dergleichen (insbesondere durch eine direkte Kopplung mit dem Behältnisboden an dem Blechprofil) gehemmt werden.

Auf eine Fertigung sowie eine Montage einer Behältnisschiene sowie die Verwendung von Befestigungsmitteln wie Schrauben für die Seitenzarge kann verzichtet werden. Der wenigstens eine Frontwandhalter und/oder der wenigstens eine Rückwandhalter umfasst bevorzugt Befestigungsmittel und/oder Öffnungen für Befestigungsmittel für eine Behältnisfront und/oder eine Behältnisrückwand, wobei die Befestigungsmittel beispielsweise in Form von Klemmvorrichtungen - besonders bevorzugt für Holzplatten - vorliegen können.

Wie eingangs ausgeführt, wird Schutz auch begehrt für ein Möbel, insbesondere Schublade, mit wenigstens einem Möbelkorpus und wenigstens einer solchen Seitenzarge, vorzugsweise wenigstens einer solchen Anordnung.

Mit den Begriffen Behältnisboden, Behältnisrückwand, Behältnisfront und dergleichen sind im Folgenden bevorzugt Bauteilkomponenten einer Schublade definiert, welche als Behältnis zusammen mit einem Möbelkorpus ein Möbel bildet.

Wie eingangs ausgeführt, wird Schutz auch begehrt für ein Verfahren zur Herstellung einer solchen Seitenzarge wobei die folgenden, insbesondere in chronologischer Reihenfolge durchzuführenden, Verfahrensschritte durchgeführt werden: Das Blechprofil und der wenigstens eine Frontwandhalter und/oder der wenigstens eine Rückwandhalter werden bereitgestellt, wobei der wenigstens eine Frontwandhalter und/oder der wenigstens eine Rückwandhalter und gegebenenfalls wenigstens ein Stabilisierungselement in das Blechprofil der Seitenzarge (1) eingeschoben wird, und das Blechprofil wird mit dem wenigstens einen Frontwandhalter und/oder mit dem wenigstens einen Rückwandhalter an zumindest einem Verbindungspunkt durch wenigstens eine Verhalsung verhalst.

Herkömmlicherweise wird eine Seitenzarge über Schweißungen und/oder Befestigungsmittel wie Nieten, Schrauben oder dergleichen mit einer Behältnisschiene und/oder einem Frontwandhalter oder einem Rückwandhalter verbunden. Durch die wenigstens eine Verhalsung sind keine zusätzlichen Bauteilkomponenten erforderlich, eine Standzeit der Seitenzarge kann erhöht werden, eine stabile Seitenzarge kann bedingt werden und ein Montage- sowie Herstellungsaufwand kann reduziert werden.

Die Merkmale der Vorrichtungsansprüche sind bei den Verfahrensansprüchen anwendbar und vice versa. Vorteilhafte Ausführungsformen der Erfindung sind in den abhängigen Ansprüchen definiert.

Vorteilhafter Weise ist vorgesehen, dass das Blechprofil mit dem wenigstens einen Frontwandhalter und/oder mit dem wenigstens einen Rückwandhalter an einer Vielzahl an Verbindungspunkten durch eine Verhalsung verhalst ist.

Durch eine erhöhte Anzahl an Verhalsungen kann eine sichere Verbindung trotz hoher Belastung der Seitenzarge gewährleistet bleiben.

Als günstig hat sich erwiesen, dass die wenigstens eine Verhalsung an einer, vorzugsweise in einem Gebrauchszustand der Seitenzarge einer Ladenschiene und/oder einem Behältnisboden zugewandten, Seitenfläche (als Bauteilkomponente mit zwei im Wesentlichen parallel ausgerichteten und/oder durch eine Materialstärke voneinander beabstandeten Seitenebenen) des Blechprofils und/oder an einer in einem Gebrauchszustand der Seitenzarge verorteten, vorzugsweise an die Seitenfläche angrenzenden, Unterseite des Blechprofils angeordnet ist.

Ist die wenigstens eine Verhalsung lediglich an einer Seite der Seitenzarge angeordnet, wird ein ästhetisches Erscheinungsbild der Seitenzarge erhöht. Liegt die wenigstens eine Verhalsung an zwei Seiten der Seitenzarge vor, kann eine besonders feste Verbindung mit dem Blechprofil erwirkt und/oder eine definierte relative Positionierung des wenigstens einen Frontwandhalters/Rückwandhalters am Blechprofil - in drei bidirektionalen Raumrichtungen - bedingt werden.

Gemäß einer vorteilhaften Ausführungsform der Erfindung ist vorgesehen, dass der wenigstens eine Frontwandhalter und/oder der wenigstens eine Rückwandhalter im Wesentlichen aus Kunststoff ausgebildet ist, wobei die wenigstens eine Verhalsung zwischen dem Kunststoff und Metall des Blechprofils vorliegt, wobei vorzugsweise vorgesehen ist, dass der wenigstens eine Frontwandhalter und/oder der wenigstens eine Rückwandhalter wenigstens ein Verbindungsmittel für eine Behältnisfront und/oder eine Behältnisrückwand, besonders bevorzugt aus Metall, umfasst.

Das wenigstens eine Verbindungsmittel kann zum Beispiel in Form eines Möbelbeschlags, einer Schraubverbindung oder dergleichen vorliegen.

Als vorteilhaft hat sich erwiesen, dass die wenigstens eine Verhalsung einen im Wesentlichen kreisförmigen Querschnitt aufweist und/oder sich die wenigstens eine Verhalsung vollständig über eine Materialstärke des Blechprofils erstreckt und/oder die wenigstens eine Verhalsung durch Material des Blechprofils in Kontaktierung mit Material des wenigstens einen Frontwandhalters und/oder des wenigstens einen Rückwandhalters gebildet ist.

Dadurch kann eine besonders feste Verbindung zwischen Blechprofil und dem wenigstens einen Frontwandhalter und/oder dem wenigstens einen Frontwandhalter generiert werden, wobei metallisches Material des Blechprofils an kunststoffartiges Material des wenigstens einen Frontwandhalters und/oder des wenigstens einen Frontwandhalters gepresst ist.

Erfindungsgemäß erstreckt sich die wenigstens eine Verhalsung zumindest bereichsweise in wenigstens eine Verhalsungsöffnung des wenigstens einen Frontwandhalters und/oder des wenigstens einen Rückwandhalters hinweg, wobei vorzugsweise vorgesehen ist, dass eine Tiefe der wenigstens eine Verhalsung zwischen 5% und 80%, besonders bevorzugt zwischen 10% und 50%, weiter besonders bevorzugt zwischen 20% und 30%, einer Verhalsungsöffnungstiefe beträgt.

Durch eine Ausdehnung der wenigstens einen Verhalsung innerhalb des wenigstens einen Frontwandhalters und/oder des wenigstens einen Rückwandhalters kann eine Verbindungsstärke zu dem Blechprofil adjustiert werden. Die Verhalsungsöffnung kann beispielsweise in Form einer Bohrung vorliegen. Im Allgemeinen ist auch eine Vertiefung im Zuge eines Spritzgießprozesses - gebildet beispielsweise durch einen Kern - möglich.

Besonders bevorzugt ist, dass das Blechprofil an einer Seitenfläche des Blechprofils eine nutförmige Profilierung, vorzugsweise mit im Wesentlichen rechteckigem Querschnitt, umfasst, welche dazu ausgebildet ist, einen Behältnisboden aufzunehmen.

Die Profilierung kann beispielsweise in Form von Biegungen in das Blechprofil eingebracht werden. Durch die Profilierung kann der Behältnisboden direkt an der wenigstens einen Seitenzarge angebunden werden, wobei die Profilierung ein Auflager für den Behältnisboden darstellen kann, sodass insbesondere keine mittelbare Verbindung zwischen Seitenzarge und Behältnisboden über eine Behältnisschiene erforderlich ist.

Bei einem Ausführungsbeispiel der Erfindung ist vorgesehen, dass in der Profilierung wenigstens ein Befestigungsmittel, vorzugsweise in Form wenigstens eines Widerhakens, besonders bevorzugt mit zwei Zacken, zur Verbindung des Behältnisbodens mit dem Blechprofil und/oder zur Sicherung des Behältnisbodens an dem Blechprofil umfasst, wobei vorzugsweise vorgesehen ist, dass das wenigstens eine Befestigungsmittel stoffschlüssig mit dem Blechprofil verbunden ist und/oder aus der Profilierung ausgestanzt ist und/oder quer in die Profilierung ragt.

Durch das wenigstens eine Befestigungsmittel kann ein unerwünschtes Lösen eines an der Seitenzarge angeordneten Behältnisbodens - und gegebenenfalls einer Behältnisrückwand - gehemmt werden, sodass eine lagesichere Lokalisierung des Behältnisbodens unmittelbar an der Seitenzarge gewährleistet werden kann.

Gemäß einem bevorzugten Ausführungsbeispiel der Erfindung ist vorgesehen, dass der wenigstens eine Frontwandhalter und/oder der wenigstens eine Rückwandhalter in Form eines Winkels zum Einschieben in das Blechprofil, vorzugsweise über eine zu einer gegebenenfalls vorhandenen Profilierung des Blechprofils korrespondierenden Vertiefung des wenigstens einen Frontwandhalters und/oder des wenigstens einen Rückwandhalters, ausgebildet ist.

Der Winkel kann als Bauteilkomponente in einer Ebene mit der Längserstreckung der wenigstens einen Seitenzarge und/oder orthogonal auf eine Ebene der Längserstreckung der wenigstens einen Seitenzarge gegeben sein. Dadurch kann Material eingespart werden und/oder eine Stabilität der wenigstens einen Seitenzarge erhöht werden und/oder eine Stabilität eines Behältnisses mit der Anordnung gesteigert werden.

Bevorzugt umfasst der wenigstens eine Frontwandhalter und/oder der wenigstens eine Rückwandhalter wenigstens ein Verbindungsmittel wie beispielsweise eine Schraube und/oder wenigstens eine Öffnung zur Anordnung wenigstens eines Verbindungsmittels wie beispielsweise eine Schraube.

Als günstig hat sich erwiesen, dass wenigstens ein Stabilisierungselement vorgesehen ist, welches, vorzugsweise in Längserstreckung der Seitenzarge mittig und/oder vollständig, zumindest bereichsweise innerhalb des Blechprofils zur Erhöhung einer Steifigkeit und/oder Festigkeit der Seitenzarge angeordnet ist, wobei vorzugsweise vorgesehen ist, dass das wenigstens eine Stabilisierungselement über eine zu einer gegebenenfalls vorhandenen Profilierung des Blechprofils korrespondierenden Vertiefung des wenigstens einen Stabilisierungselements in das Blechprofil einschiebbar ist.

Durch das wenigstens eine Stabilisierungselement kann eine Formtreue der Seitenzarge unter Belastung - insbesondere bei langen Seitenzargen - erhöht werden, wobei unerwünschte Deformationen der Seitenzarge reduziert werden können. Über die Vertiefung wird eine Montage des wenigstens einen Stabilisierungselements erleichtert und eine sachgemäße Positionierung relativ zu der wenigstens einen Seitenzarge begünstigt.

Weiters ist bevorzugt vorgesehen, dass eine Breite des Blechprofils zwischen 3 mm und 10 mm, vorzugsweise zwischen 4 mm und 6 mm, liegt.

Erfindungsgemäß kann eine seitliche Ausdehnung des Blechprofils gegenüber Seitenzargen mit Behältnisschienen reduziert werden, da auf die Behältnisschiene sowie gesonderte Verbindungsmittel wie Schraubverbindungen verzichtet werden kann. Dadurch kann eine besonders kompakte Anordnung erwirkt werden, wobei beispielsweise mehr Stauraum in einem Behältnis mit einer solchen Anordnung oder bei selbigem Stauraum ein schmaleres Behältnis generiert werden kann.

In einer weiteren Ausführungsform kann vorgesehen sein, dass der wenigstens eine Frontwandhalter und/oder das Blechprofil wenigstens eine Koppelvorrichtung zur unmittelbaren, vorzugsweise behältnisschienenlosen, Koppelung mit einer Ladenschiene umfasst.

Wenn die wenigstens eine Koppelvorrichtung direkt am Frontwandhalter oder dem Blechprofil angeordnet ist, kann auf eine mittelbare Verbindung mit der wenigstens einen Ladenschiene über eine Behältnisschiene verzichtet werden. Eine Kraftübertragung zwischen der wenigstens einen Seitenzarge und der wenigstens einen Ladenschiene erfolgt dadurch in vorteilhafter Weise.

Gemäß einer vorteilhaften Ausgestaltung der Erfindung ist vorgesehen, dass die wenigstens eine Seitenzarge, vorzugsweise die Seitenfläche des Blechprofils, in einem an der wenigstens einen Ladenschiene befestigten Zustand zumindest bereichsweise direkt zwischen dem seitlichen Steg und dem weiteren seitlichen Steg angeordnet ist.

Dadurch wird es ermöglicht, dass vollständig auf eine Behältnisschiene verzichtet werden kann, welche als Verbindungsglied zwischen der wenigstens einen Seitenzarge und der Ladenschiene fungiert. Die wenigstens eine Seitenzarge - insbesondere die Seitenfläche des Blechprofils - kann durch die relative Positionierung zwischen der wenigstens einen Korpusschiene und der wenigstens einen Ladenschiene sowohl für die unmittelbare Anbindung eines Behältnisbodens als auch (beispielsweise über den wenigstens einen Frontbeschlag) für die unmittelbare Koppelung mit der Ladenschiene agieren.

Zu den fertigungstechnischen und montagetechnischen Verbesserungen wie Materialersparnis, Bauteilreduktion, reduzierten Montageaufwand, Kostenersparnis et cetera kommt die positive Eigenschaft hinzu, dass die wenigstens eine Ladenschiene nicht durch eine Behältnisschiene im Gebrauchszustand nach oben hin verdeckt wird, sodass die wenigstens eine Ladenschiene als Auflager für den Behältnisboden dienen kann.

Die Seitenfläche als integraler Bestandteil des Blechprofils, welche der wenigstens einen Ladenschiene zugewandt ist, stellt im Allgemeinen jene Seitenfläche dar, welche im Wesentlichen parallel zu einer der wenigstens einen Korpousschiene zugewandten Seitenfläche (welche im Allgemeinen beispielsweise einen Knick aufweisen kann) angeordnet ist.

Die Formulierung direkt kann synonym mit der Begrifflichkeit unmittelbar interpretiert werden, wobei mit anderen Worten keine Behältnisschiene an dem Blechprofil der wenigstens einen Seitenzarge angeordnet ist. Das heißt, ausgehend von dem Steg und/oder dem weiteren Steg ist in orthogonaler Richtung auf den Steg und/oder dem weiteren Steg keine Behältnisschiene, sondern das Blechprofil verortet.

Die Seitenfläche als integraler Bestandteil des Blechprofils, welche der wenigstens einen Ladenschiene zugewandt ist, stellt im Allgemeinen jene Seitenfläche dar, welche im Wesentlichen parallel zu einer der wenigstens einen Korpousschiene zugewandten Seitenfläche (welche im Allgemeinen beispielsweise einen Knick aufweisen kann) angeordnet ist.

Gemäß einer vorteilhaften Ausgestaltung der Erfindung ist vorgesehen, dass die wenigstens eine Ladenschiene eine im Wesentlichen orthogonal zu dem weiteren seitlichen Steg ausgerichtete, vorzugsweise an den weiteren seitlichen Steg angrenzende, Auflagefläche zur unmittelbaren Abstützung eines Behältnisboden im Gebrauchszustand der Anordnung umfasst, wobei vorzugsweise vorgesehen ist, dass die Auflagefläche im Gebrauchszustand der Anordnung in vertikaler Richtung von oben, besonders bevorzugt zumindest bereichsweise und/oder im Bereich eines Kontaktierungsareals für den Behältnisboden, frei zugänglich ist.

Im Stand der Technik liegt der Behältnisboden auf der Behältnisschiene auf. Durch die Auflagefläche der Ladenschiene kann einerseits auf die Behältnisschiene verzichtet werden und es kann eine besonders stabile Abstützung des Behältnisbodens an der wenigstens einen Ladenschiene erfolgen.

Vorteilhafter Weise ist vorgesehen, dass genau ein Blechprofil zur direkten Verbindung mit der Ladenschiene und/oder einem Behältnisboden vorgesehen ist.

Bevorzugt wird das genau eine Blechprofil ausschließlich durch den Zargenhut - insbesondere ohne Behältnisschiene - gebildet.

Als günstig hat sich erwiesen, dass die wenigstens eine Seitenzarge durch wenigstens eine Koppelvorrichtung des Blechprofils und/oder des wenigstens einen Frontwandhalters unmittelbar durch Kontaktierung, vorzugsweise behältnisschienenlos, mit der wenigstens eine Ladenschiene gekoppelt ist.

Wenn die wenigstens eine Koppelvorrichtung direkt am Frontwandhalter oder dem Blechprofil angeordnet ist, kann auf eine mittelbare Verbindung mit der wenigstens einen Ladenschiene über eine Behältnisschiene verzichtet werden. Eine Kraftübertragung zwischen der wenigstens einen Seitenzarge und der wenigstens einen Ladenschiene erfolgt dadurch in vorteilhafter Weise.

Gemäß einer vorteilhaften Ausführungsform der Erfindung ist vorgesehen, dass die Anordnung wenigstens einen Behältnisboden umfasst, welcher das Blechprofil direkt, vorzugsweise behältnisschienenlos und/oder über eine nutförmige Profilierung einer Seitenfläche des Blechprofils zur Aufnahme des wenigstens einen Behältnisbodens, kontaktiert, wobei vorzugsweise vorgesehen ist, dass der wenigstens eine Behältnisboden an dem Blechprofil über wenigstens ein Befestigungsmittel gesichert ist.

Im Stand der Technik liegt der Behältnisboden auf der Behältnisschiene in einem schmalen Kontaktierungsbereich auf und ist kontaktlos zur Seitenzarge angeordnet, wobei durch die direkte Kontaktierung des wenigstens einen Behältnisbodens an der wenigstens einen Seitenzarge auf die Behältnisschiene verzichtet werden kann und zudem eine vereinfachte, sichere und/oder stabile Anbindung des wenigstens einen Behältnisbodens gewährleistet werden kann.

Als vorteilhaft hat sich erwiesen, dass der wenigstens eine Behältnisboden im Wesentlichen bündig zu der wenigstens einen Ladenschiene angeordnet ist, wobei vorzugsweise vorgesehen ist, dass der wenigstens eine Behältnisboden flächig auf der wenigstens einen Ladenschiene aufliegt.

Liegt der wenigstens eine Behältnisboden flächig auf der wenigstens einen Ladenschiene auf, kann einem unerwünschten Durchbiegen des wenigstens einen Behältnisbodens durch das über die wenigstens eine Ladenschiene gebildete Auflager für den wenigstens einen Behältnisboden entgegengewirkt werden. Im Allgemeinen kann der wenigstens eine Behältnisboden auch mit Spiel zu der wenigstens einen Ladenschiene angeordnet sein, wobei beispielsweise eine Kontaktierung erst durch Belastung der Anordnung erfolgt.

Eine vorteilhafte Variante besteht darin, dass die Anordnung wenigstens eine Behältnisrückwand umfasst, welche an dem wenigstens einen Rückwandhalter angeordnet ist.

Bevorzugt ist vorgesehen, dass eine Kraftübertragung bei, vorzugsweise vertikaler und/oder lateraler, Belastung der Anordnung in einem Gebrauchszustand der Anordnung unmittelbar, vorzugsweise behältnisschienenlos, zwischen der wenigstens einen Seitenzarge, vorzugsweise dem Blechprofil und/oder dem wenigstens einen Frontwandhalter und/oder dem wenigstens einen Rückwandhalter, und der wenigstens einen Ladenschiene vermittelbar ist.

Da auf die Behältnisschiene verzichtet werden kann, wird eine laufzeitverlängernder Kraftfluss innerhalb der wenigstens einen Seitenzarge und/oder zwischen der wenigstens einen Seitenzarge und der wenigstens einen Ladenschiene bei Belastung der Anordnung ermöglicht.

Besonders bevorzugt ist vorgesehen, dass in einem vorbereitenden Verfahrensschritt wenigstens eine Verhalsungsöffnung in den wenigstens einen Frontwandhalter und/oder den wenigstens einen Rückwandhalter eingebracht wird, wobei die wenigstens eine Verhalsung zwischen Kunststoff des wenigstens einem Frontwandhalters und/oder des wenigstens einen Rückwandhalters und Metall des Blechprofils, vorzugsweise mit im Wesentlichen kreisförmigen Querschnitt, gebildet ist, wobei sich die wenigstens eine Verhalsung zumindest bereichsweise in der wenigstens einen Verhalsungsöffnung des wenigstens einen Frontwandhalters und/oder des wenigstens einen Rückwandhalters hinweg erstreckt.

Bevorzugt ist, dass die wenigstens eine Verhalsung, vorzugsweise automatisiert, durch wenigstens einen Stempel oder Stift eingebracht wird, wobei vorzugsweise vorgesehen ist, dass das Blechprofil mit dem wenigstens einen Frontwandhalter und/oder mit dem wenigstens einen Rückwandhalter an einer Vielzahl an Verbindungspunkten durch eine Verhalsung, besonders bevorzugt an einer Seitenfläche des Blechprofils und/oder an einer in einem Gebrauchszustand der Seitenzarge verorteten Unterseite des Blechprofils angeordnet, verhalst ist.

Dadurch kann ein Fertigungsaufwand zur Bildung der Seitenzarge reduziert werden, sodass ein besonders effizienter Herstellungsprozess erfolgen kann.

Bevorzugt weist der Stempel eine, vorzugsweise konusförmige, Verjüngung an einem freien Ende auf und/oder umfasst einen Durchmesser, welcher im Wesentlichen einer Ausdehnung der Verhalsungsöffnung minus doppelter Materialstärke des Blechprofils aufweist.

Erfindungsgemäß ist vorgesehen, dass Material des Blechprofils an wenigstens eine Verhalsungsöffnung gepresst wird, sodass eine kraftschlüssige Verbindung entlang der wenigstens einen Verhalsungsöffnung und/oder eine formschlüssige Verbindung orthogonal auf die wenigstens eine Verhalsungsöffnung gebildet wird.

Dadurch kann eine besonders sichere und stabile Verbindung zwischen dem Blechprofil und dem wenigstens einen Frontwandhalter und/oder Rückwandhalter generiert werden.

Weitere Einzelheiten und Vorteile der vorliegenden Erfindung werden anhand der Figurenbeschreibung unter Bezugnahme auf die in den Zeichnungen dargestellten Ausführungsbeispiele im Folgenden näher erläutert. Darin zeigen:
- Fig. 1a, 1b: eine Seitenzarge gemäß einer bevorzugten Ausführungsform in einer perspektivischen Explosionsdarstellung sowie in perspektivischer Ansicht mit montiertem Frontwandhalter und Rückwandhalter,
- Fig. 2a, 2b: die Seitenzarge gemäß dem Ausführungsbeispiel nach Fig. 1b vor dem Einbringen von Verhalsungen an einer Unterseite eines Blechprofils eines Zargenhuts und mit bereits eingebrachten Verhalsungen an einer Seitenfläche des Blechprofils,
- Fig. 3a, 3b: die Seitenzarge gemäß dem Ausführungsbeispiel nach Fig. 2b während und nach dem Einbringen von Verhalsungen an der Unterseite des Blechprofils in einer perspektivischen Darstellung,
- Fig. 4a, 4b: die Seitenzarge gemäß dem Ausführungsbeispielen nach Fig. 3a und 3b in einer Schnittdarstellung mit vergrößertem Detailausschnitt im Bereich von Verbindungspunkten der Verhalsungen,
- Fig. 5a-5c: die Seitenzarge gemäß dem Ausführungsbeispiel nach Fig. 3b in einer perspektivischen Ansicht, einer Ansicht mit Blickrichtung auf die
- **Fig. 6a,**: Seitenfläche des Blechprofils sowie mit Blickrichtung auf die Unterseite des Blechprofils, 6b eine Seitenzarge gemäß einer weiteren bevorzugten Ausführungsform in perspektivischer Ansicht variierender Blickwinkel mit Detailausschnitten im Bereich von Verhalsungen an der Seitenfläche sowie an der Unterseite des Blechprofils,
- Fig. 7a, 7b: ein Behältnis in Form einer Schublade mit einer Seitenzarge in perspektivischer Ansicht unterschiedlicher Blickrichtungen sowie einem Detailausschnitt im Bereich des Rückwandhalters,
- Fig. 8a, 8b: die Seitenzarge gemäß dem Ausführungsbeispiel nach Fig. 6a in perspektivischer Explosionsdarstellung,
- Fig. 9a, 9b: die Seitenzarge gemäß dem Ausführungsbeispiel nach Fig. 6a während einem Montageprozesses in perspektivischer Ansicht,
- Fig. 10: eine Anordnung aus einer Seitenzarge, einer Ladenschiene und einer Korpusschiene in perspektivischer Ansicht mit einem vergrößerten Detailansicht im Bereich einer Koppelvorrichtung zwischen dem Frontwandhalter und der Ladenschiene.

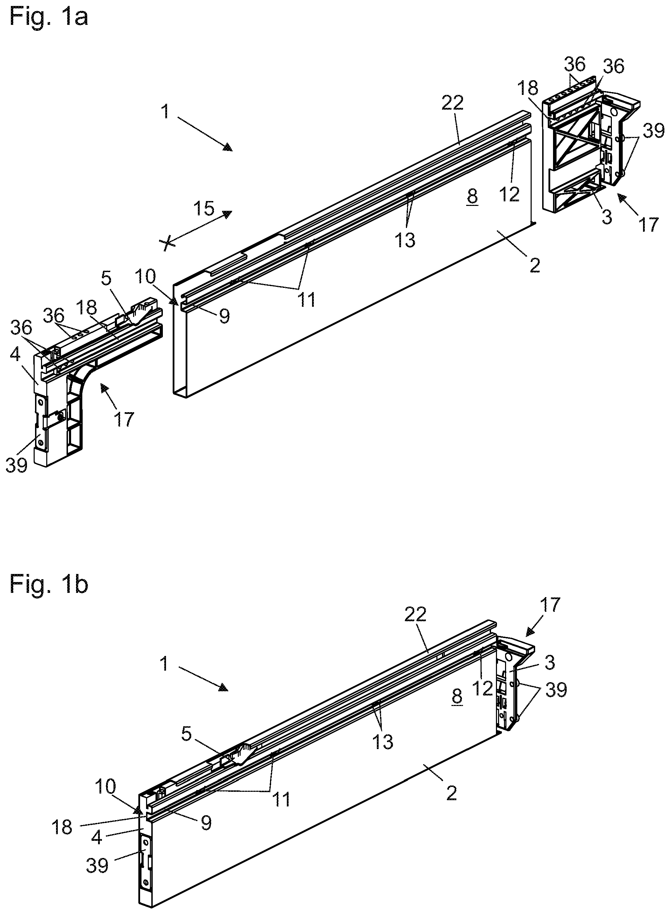

Fig. 1a zeigt eine Seitenzarge 1 in Form einer Behältnisseitenwand als Schubladenseitenwand ausgebildet in Explosionsdarstellung.

Die Seitenzarge 1 umfasst einen Rückwandhalter 3, einen Frontwandhalter 4 und ein einstückiges, gebogenes Blechprofil 2 in Form eines Zargenhuts zur Aufnahme des Rückwandhalters 3 und des Frontwandhalters 4.

Das Blechprofil 2 umfasst an einer Seitenfläche 8 des Blechprofils 2 eine nutförmige Profilierung 9 mit im Wesentlichen rechteckigem Querschnitt 10, welche dazu ausgebildet ist, einen Behältnisboden 7 aufzunehmen.

In der Profilierung 9 sind Befestigungsmittel 11 in Form von Widerhaken 12 mit zwei Zacken 13 (die Anzahl an Zacken 13 ist im Allgemeinen beliebig) zur Verbindung des Behältnisbodens 7 mit dem Blechprofil 2 und zur Sicherung des Behältnisbodens 7 an dem Blechprofil 2 vorgesehen. Die Befestigungsmittel 11 sind stoffschlüssig mit dem Blechprofil 2 verbunden, aus der Profilierung 9 ausgestanzt und ragen quer in die Profilierung 9.

Der Frontwandhalter 4 und der Rückwandhalter 3 liegen in Form eines Winkels 17 (in einer Ebene entlang einer Längserstreckung 15 oder in einer Ebene orthogonal auf die Längserstreckung 15) zum Einschieben in das Blechprofil 2 über eine zu einer Profilierung 9 des Blechprofils 2 korrespondierenden Vertiefung 18 des Frontwandhalters 4 und des Rückwandhalters 3 vor.

Fig. 1b zeigt die Seitenzarge 1 in partiell montiertem Zustand vor einem Einbringen von Verhalsungen zur Verbindung des Frontwandhalters 4 und des Rückwandhalters 3 am Blechprofil 2, wobei der Rückwandhalter 3 und der eine Frontwandhalter 4 innerhalb des Blechprofils 2 angeordnet sind.

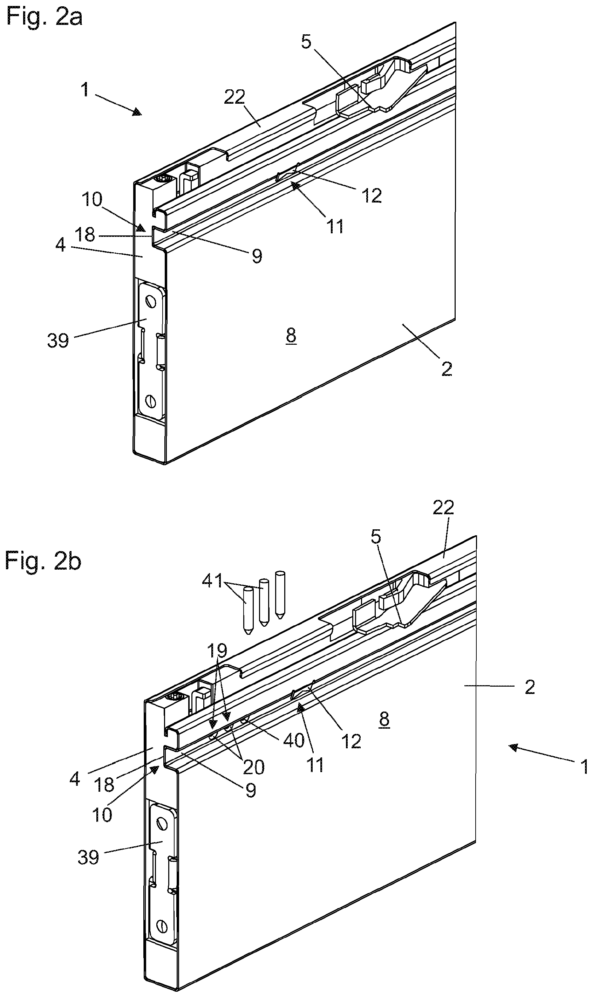

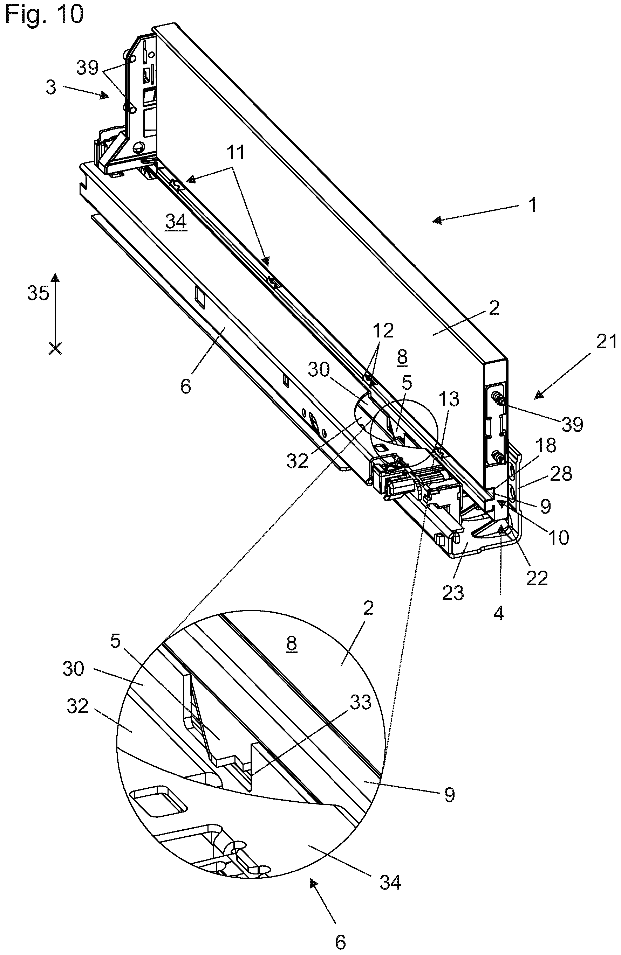

Fig. 2a zeigt, dass der Frontwandhalter 4 (im Allgemeinen auch am Blechprofil 2 denkbar) eine Koppelvorrichtung 5 zur unmittelbaren und behältnisschienenlosen Koppelung mit einer Ladenschiene 6 umfasst (vgl. Fig. 10).

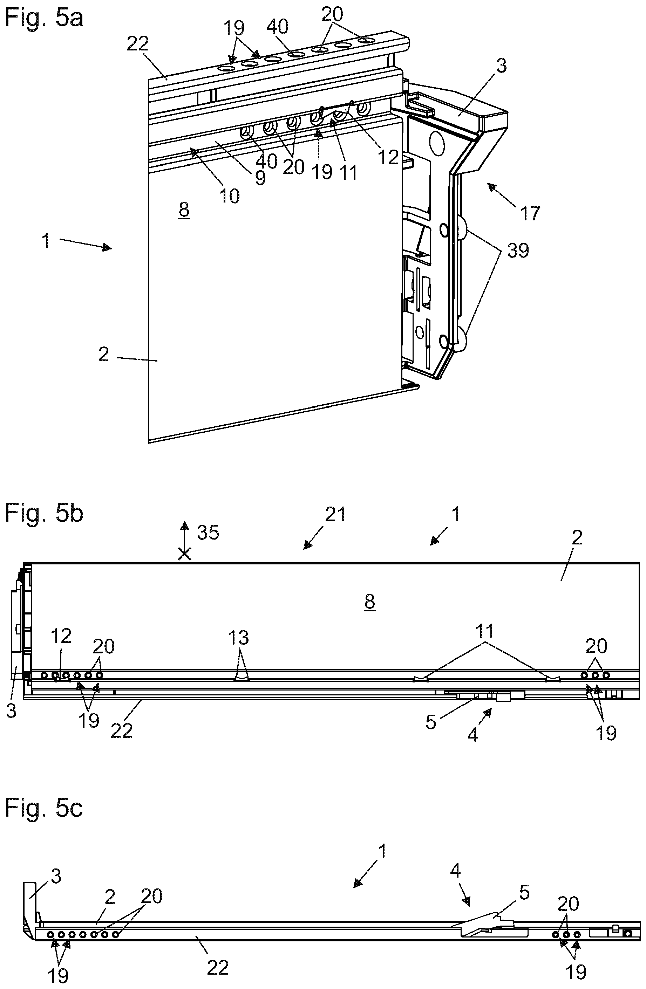

Fig. 2b zeigt, dass das Blechprofil 2 bereits mit dem Frontwandhalter 4 (gegebenenfalls auch bereits mit dem Rückwandhalter 3) an einer Vielzahl an Verbindungspunkt 19 durch Verhalsungen 20 verhalst ist. Die Verhalsungen sind an einer in einem Gebrauchszustand 21 der Seitenzarge 1 einer Ladenschiene 6 oder einem Behältnisboden 7 zugewandten (siehe Fig. 5b) Seitenfläche 8 des Blechprofils 2 angeordnet.

Weitere Verhalsungen 20 werden an einer in einem Gebrauchszustand 21 der Seitenzarge 1 verorteten, an die Seitenfläche 8 angrenzenden Unterseite 22 (siehe Fig. 5b) des Blechprofils 2 angeordnet.

Die Verhalsungen 20 werden automatisiert durch Stempel 41 eingebracht, wobei die Stempel 41 eine konusförmige Verjüngung an einem freien Ende aufweisen, mit welchem Material des Blechprofils 2 an Material des Frontwandhalters 4 über die Verhalsungsöffnung 36 angepresst werden kann.

Der Frontwandhalter 4 und der Rückwandhalter 3 sind grundsätzlich aus Kunststoff ausgebildet, wobei die Verhalsungen 20 zwischen dem Kunststoff und Metall des Blechprofils 2 vorliegen. Der Frontwandhalter 4 umfasst Verbindungsmittel 39 für eine Behältnisfront 24 aus Metall.

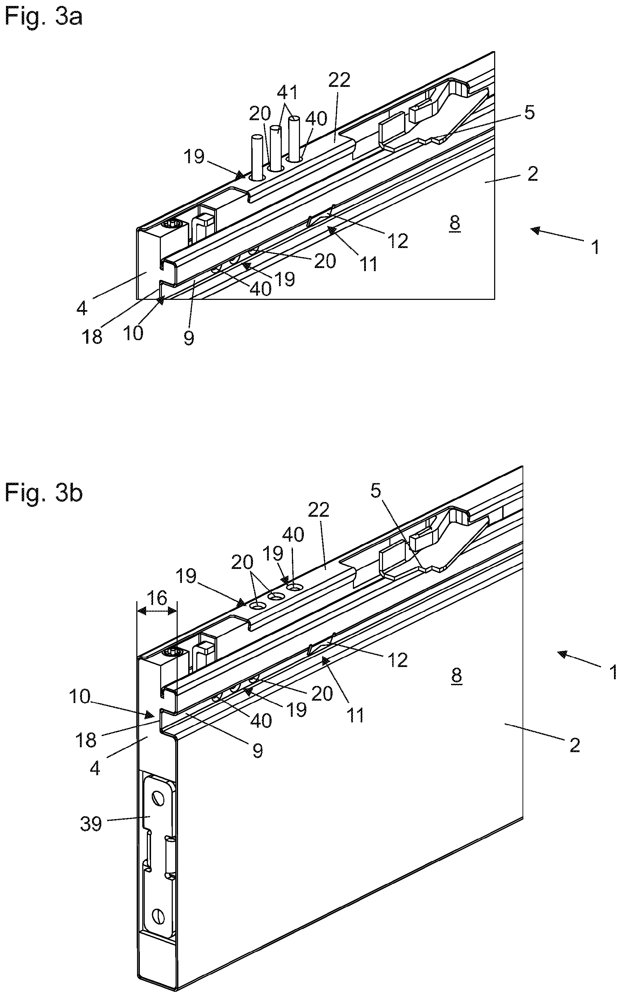

Fig. 3a zeigt, den Prozessschritt des Einbringens von Verhalsungen 20 an der Unterseite 22 des Blechprofils 2 in Verbindung mit dem Frontwandhalter 4.

Fig. 3b zeigt, dass das Blechprofil 2 eine Breite 16 aufweist, wobei die Breite 16 zwischen 4 mm und 6 mm liegt. Die Verhalsungen 20 sind eingebracht, sodass die Seitenzarge 1 direkt an eine Ladenschiene 6 angebunden werden kann.

Die Verhalsungen 20 an der Unterseite 22 generieren eine plane Unterseite 22. Die Verhalsungen an der Seitenfläche 8 sind innerhalb der Profilierung 9 angeordnet und werden nach Anbindung eines Behältnisbodens 7 durch den Behältnisboden 7 verdeckt.

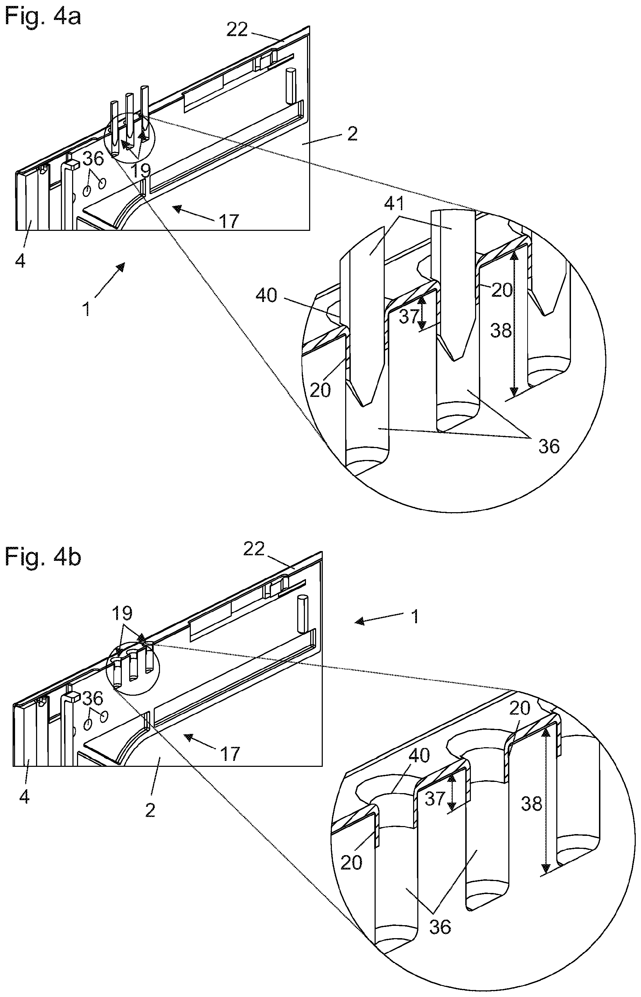

Fig. 4a zeigt, dass die Verhalsungen 20 einen kreisförmigen Querschnitt 40 aufweisen und sich die Verhalsungen 20 vollständig über eine Materialstärke des Blechprofils 2 erstrecken sowie durch Material des Blechprofils 2 in Kontaktierung mit Material des Frontwandhalters 4 - oder des Rückwandhalters 3 - gebildet werden.

Fig. 4b unterscheidet sich von Fig. 4a lediglich dahingehend, dass Stempel 41 bereits aus den Verhalsungsöffnungen 36 entfernt wurden.

Die Verhalsungen 20 erstrecken sich bereichsweise in den Verhalsungsöffnungen 36 des Frontwandhalters 4 (oder des Rückwandhalters 3) hinweg.

Eine Tiefe 37 der Verhalsungen 20 liegt zwischen 10% und 50% einer Verhalsungsöffnungstiefe 38 vor.

Fig. 5a zeigt einen Detailausschnitt der Seitenzarge 1 im Bereich des Rückwandhalters 3 vergrößert dargestellt.

Ein Verfahren zur Herstellung der Seitenzarge 1 kann wie folgt (ohne zwingenden chronologischen Zusammenhang) exemplarisch dargestellt werden:
- das Blechprofil 2, der Frontwandhalter 4 und der Rückwandhalter 3 werden bereitgestellt, wobei der Frontwandhalter 4 und der Rückwandhalter 3 (gegebenenfalls mit einem Stabilisierungselement 14) in das Blechprofil 2 der Seitenzarge 1 eingeschoben werden
- zumindest eine Verhalsungsöffnung 20 wird in den Frontwandhalter 4 oder den Rückwandhalter 3 eingebracht
- das Blechprofil 2 wird mit dem Frontwandhalter 4 und dem Rückwandhalter 3 an zumindest einem Verbindungspunkt 19 durch eine Verhalsung 20 verhalst, wobei die Verhalsung 20 zwischen Kunststoff des Frontwandhalters 4 oder des Rückwandhalters 3 und Metall des Blechprofils 2 gebildet wird und sich die Verhalsung 20 bereichsweise in der Verhalsungsöffnung 36 des Frontwandhalters 4 oder des Rückwandhalters 3 hinweg erstreckt.

Fig. 5b zeigt, dass die Verhalsungen 20 einen kreisförmigen Querschnitt 40 aufweisen und jeweils an einem Endbereich des Blechprofils 2 angeordnet sind.

Fig. 5c unterscheidet sich von Fig. 5b lediglich dahingehend, dass die Seitenzarge 1 von der Unterseite 22 dargestellt ist.

Material des Blechprofils 2 ist an die Verhalsungsöffnung 36 derart gepresst, dass eine kraftschlüssige Verbindung entlang der Verhalsungsöffnung 36 und eine formschlüssige Verbindung orthogonal auf die Verhalsungsöffnung 36 vorliegt.

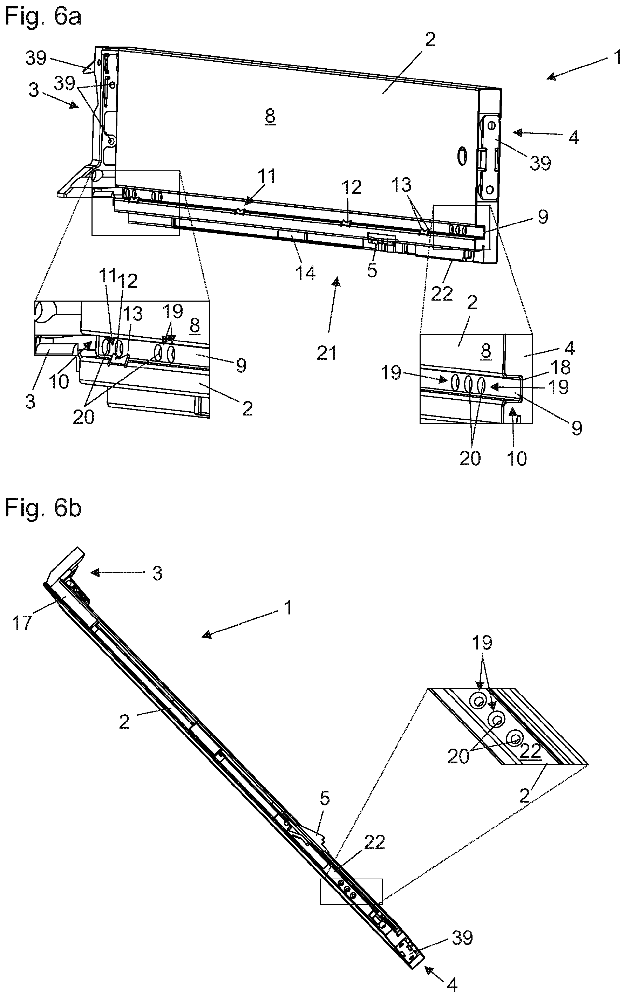

Fig. 6a zeigt, dass der Rückwandhalter 3 Verbindungsmittel 39 für eine Behältnisrückwand 25 umfasst, wobei die Verbindungsmittel 39 in Form eines an die Behältnisrückwand 25 anpressbaren Klemmmittels und in Form von Öffnungen für Befestigungsmittel wie Schrauben vorliegen. Im Allgemeinen kann lediglich ein Klemmmittel oder Öffnungen vorgesehen sein.

Die Seitenzarge 1 liegt im vollständig montierten Zustand vor, wobei die Seitenzarge 1 bereit ist, um direkt mit einer Ladenschiene 6 oder einem Behältnisboden 7 verbunden zu werden.

Das Blechprofil 2 ist mit dem Frontwandhalter 4 und mit dem Rückwandhalter 3 an einer Vielzahl an Verbindungspunkten 19 verhalst, wobei die Anzahl an Verbindungspunkte 19 im Allgemeinen beliebig ist.

Verhalsungen 20 sind an der Seitenfläche 8 des Blechprofils 2 innerhalb an der Profilierung 9 angeordnet, wobei dies nicht zwingend erforderlich ist.

Fig. 6b unterscheidet sich von Fig. 3a lediglich dahingehend, dass die Seitenzarge 1 aus geänderter Blickrichtung betrachtet wird.

Verhalsungen 20 sind an einer in einem Gebrauchszustand 21 der Seitenzarge 1 verorteten Unterseite 22 des Blechprofils 2 angeordnet. Im Allgemeinen ist möglich, eine Verhalsung lediglich auf der Seitenfläche 8 oder der Unterseite 22 vorzusehen.

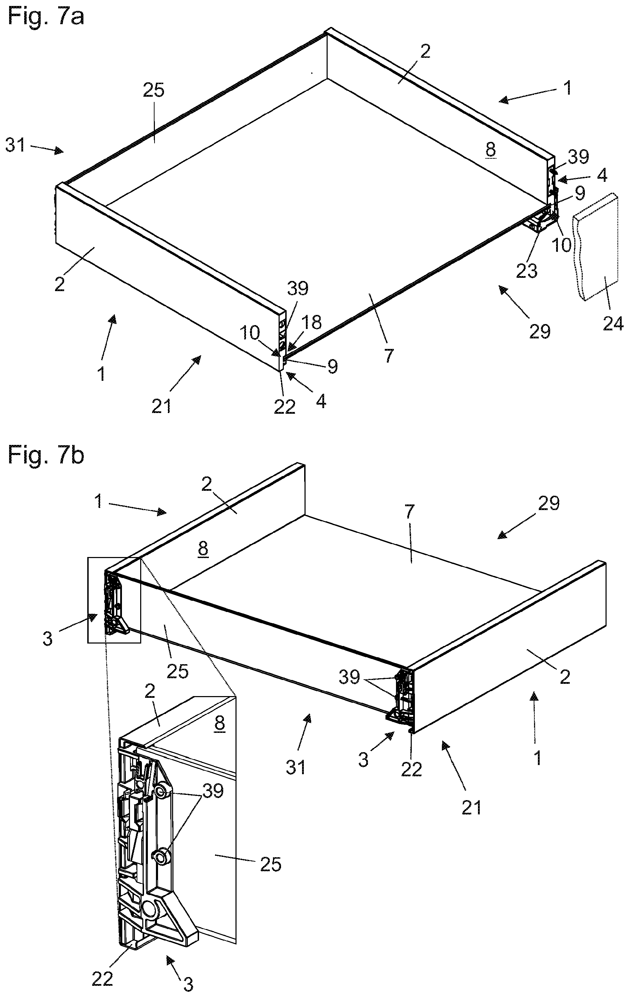

Fig. 7a zeigt ein Behältnis 29 in Form einer Schublade 31 für ein Möbel mit einem Möbelkorpus (in der Darstellung aus Übersichtlichkeitsgründen nicht dargestellt) und wenigstens einer Anordnung aus Seitenzarge 1, Ladenschiene 6 und Korpusschiene 23, wobei die Ladenschiene 6 durch den Behältnisboden 7 verdeckt ist.

Der Behältnisboden 7 kontaktiert das Blechprofil 2 direkt und behältnisschienenlos über die nutförmige Profilierung 9 der Seitenfläche 8 des Blechprofils 2 zur Aufnahme des Behältnisbodens 7. Der Behältnisboden 7 ist an dem Blechprofil 2 über die Befestigungsmittel 11 gesichert, wobei genau ein Blechprofil 2 zur unmittelbaren Verbindung mit der Ladenschiene 6 und dem Behältnisboden 7 vorgesehen ist.

Die Verhalsungen 20 unterstützen durch die baulichen Größen eine Montagevorgang des Behältnisses 29.

Eine Behältnisfront 24 ist schematisch in gestrichelter Linienausführung angedeutet.

Der Behältnisboden 7 ist bündig zu der Ladenschiene 6 angeordnet, wobei der Behältnisboden 7 flächig auf der Ladenschiene 6 aufliegt.

Fig. 7b unterscheidet sich von Fig. 4a lediglich durch die Ansicht aus einem geänderten Blickwinkel. Im vergrößerten Detailausschnitt ist ersichtlich, dass die Behältnisrückwand 25 an dem Rückwandhalter 3 angeordnet ist.

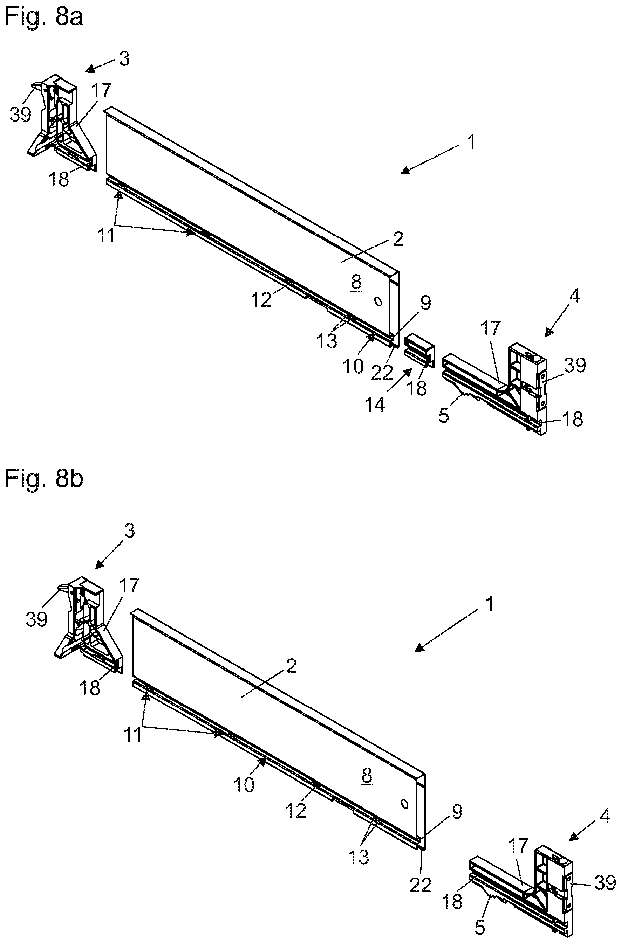

Fig. 8a und Fig. 8b zeigen Seitenzargen 1 in Form einer Behältnisseitenwand als Schubladenseitenwand ausgebildet in einem demontierten Zustand zur direkten Anbindung an einen Behältnisboden 7 sowie einer Ladenschiene 6 (siehe Fig. 10).

In Fig. 8a umfasst die Seitenzarge einen Zargenhut - gebildet aus einem einstückigen gebogenen Blechprofil 2 - zur Aufnahme eines Rückwandhalters 3 und eines Frontwandhalters 4, wobei der Frontwandhalter 4 dazu eingerichtet ist, mit einer Behältnisfront 24 verbunden zu werden, und der Rückwandhalter 3 dazu eingerichtet ist, mit einer Behältnisrückwand 25 verbunden zu werden.

Der Frontwandhalter 4 der Seitenzarge 1 umfasst eine Koppelvorrichtung 5 zur unmittelbaren und behältnisschienenlosen Koppelung mit der Ladenschiene 6. Im Allgemeinen ist möglich, dass die Koppelvorrichtung 5 alternativ oder in Ergänzung an dem Blechprofil 2 angeordnet ist, wobei vorgesehen ist, dass keine mittelbare Koppelung zwischen der Ladenschiene 6 und der Seitenzarge 1 über eine zwischen der Seitenzarge und der Ladenschiene 6 angeordnete Behältnisschiene erfolgt.

Die Seitenzarge 1 umfasst ein Stabilisierungselement 14, welches in Längserstreckung 15 der Seitenzarge 1 mittig bereichsweise innerhalb des Blechprofils 2 zur Erhöhung einer Steifigkeit und Festigkeit der Seitenzarge 1 anordenbar ist. Im Allgemeinen kann auf das Stabilisierungselement 14 auch - insbesondere bei kurzen Längserstreckungen 15 der Seitenzarge 1 - verzichtet werden.

Das Blechprofil 2 weist an einer Seitenfläche 8 des Blechprofils 2 eine nutförmige Profilierung 9 mit im Wesentlichen rechteckigem Querschnitt 10 auf, welche dazu ausgebildet ist, einen Behältnisboden 7 aufzunehmen (siehe Fig. 7a).

Das Stabilisierungselement 14 ist über eine zu der Profilierung 9 des Blechprofils 2 korrespondierenden Vertiefung 18 des Stabilisierungselements 14 in das Blechprofil 2 einschiebbar.

Fig. 8b zeigt eine Seitenzarge 1 ohne Stabilisierungselement 14, welche beispielsweise für niedrige Belastungen, oder geringe Längserstreckungen 15 genutzt werden kann.

In der Profilierung 9 ist eine Vielzahl an Befestigungsmitteln 11 angeordnet, wobei die Anzahl an Befestigungsmitteln 11 im Allgemeinen beliebig ist. Die Befestigungsmitteln 11 liegen in Form von Widerhaken 12 vor, wobei die Widerhaken 12 jeweils zwei Zacken 13 aufweisen und die Befestigungsmittel 11 zur Verbindung des Behältnisbodens 7 mit dem Blechprofil 2 und zur Sicherung des Behältnisbodens 7 an dem Blechprofil 2 geeignet sind. Die Widerhaken 12 können auch anderweitig ausgestaltet sein.

Die Befestigungsmittel 11 sind stoffschlüssig mit dem Blechprofil 2 verbunden, aus der Profilierung 9 ausgestanzt und ragen quer in die Profilierung 9.

Der Frontwandhalter 4 und der Rückwandhalter 3 sind aus Kunststoff ausgebildet, wobei Befestigungsmittel für eine Behältnisrückwand 25 oder eine Behältnisfront 24 metallisch ausgebildet sind.

Der Frontwandhalter 4 und der Rückwandhalter 3 sind in Form eines Winkels 17 (ggf. in zwei orthogonalen Raumrichtungen) zum Einschieben in das Blechprofil 2 über eine zu der Profilierung 9 des Blechprofils 2 korrespondierenden Vertiefung 18 des Frontwandhalters 4 und des Rückwandhalters 3, ausgebildet.

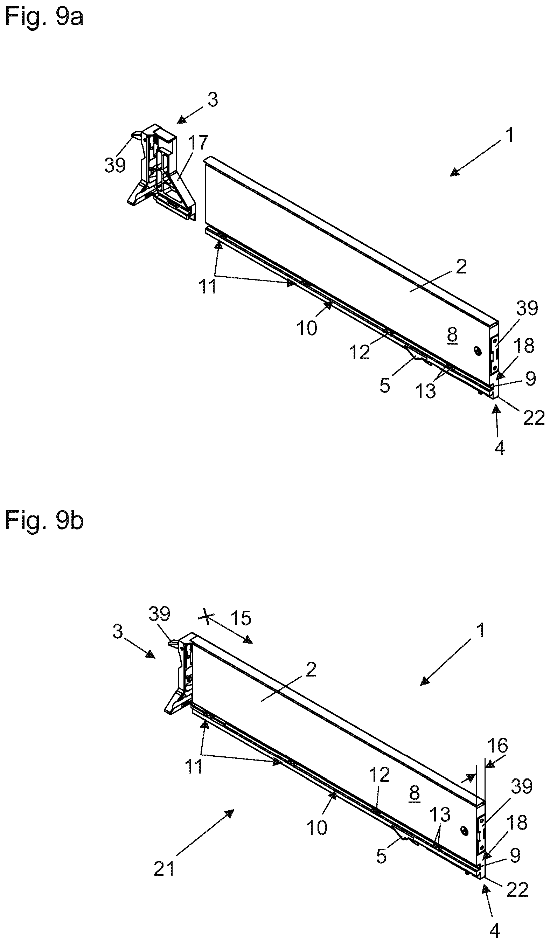

Fig. 9a zeigt die Seitenzarge 1 im Montageverfahren, wobei der Frontwandhalter 4 bereits in das Blechprofil 2 eingeschoben wurde.

Fig. 9b unterscheidet sich von Fig. 9a lediglich dahingehend, dass auch der Rückwandhalter 3 im Zuge eines Montageprozessschrittes in das Blechprofil 2 der Seitenzarge 1 eingeschoben wurde.

Eine Breite 16 des Blechprofils 2 liegt zwischen 4 mm und 6 mm.

Fig. 10 zeigt eine Anordnung aus der Korpusschiene 23 mit einem seitlichen Steg 28 zur Verbindung der Korpusschiene 23 mit einem Möbelkorpus, einer quaderförmigen Ladenschiene 6 mit einem im Gebrauchszustand 21 der Anordnung parallel zu dem seitlichen Steg 28 orientierten weiteren seitlichen Steg 30 und wenigstens einer Seitenzarge 1 in Form der Behältnisseitenwand als Schubladenseitenwand ausgebildet.

Die Ladenschiene 6 umfasst eine orthogonal zu dem weiteren seitlichen Steg 30 ausgerichtete und an den weiteren seitlichen Steg 30 angrenzende Auflagefläche 34 zur unmittelbaren Abstützung des Behältnisboden 7 im Gebrauchszustand 21 der Anordnung. Im Gebrauchszustand 21 der Anordnung ist die Auflagefläche 34 in vertikaler Richtung 35 von oben und insbesondere im Bereich eines Kontaktierungsareals für den Behältnisboden 7 frei zugänglich.

Durch die Koppelvorrichtung 5 ist die Seitenzarge 1 unmittelbar durch Kontaktierung und behältnisschienenlos mit der Ladenschiene 6 gekoppelt.

Die Seitenzarge 1 ist über die Ladenschiene 6 relativ zu der wenigstens einen Korpusschiene 23 verschiebbar gelagert, wobei eine Mittelschiene 32 zur Gewährleistung eines Vollauszugs der Schublade 31 vorgesehen ist. Die Mittelschiene 32 ist im Allgemeinen jedoch nicht zwingend erforderlich.

Die Seitenzarge umfasst den Frontwandhalter 4 zur Anbindung der Behältnisfront 24, den Rückwandhalter 3 zur Anbindung der Behältnisrückwand 25 und das einstückige, gebogene Blechprofil 2 in Form eines Zargenhuts zur Aufnahme des Rückwandhalters 3 und des Frontwandhalters 4, wobei der Frontwandhalter 4 vollständig und der Rückwandhalter 3 bereichsweise innerhalb des Blechprofils 2 angeordnet sind.

Die im Gebrauchszustand 21 der Anordnung der Ladenschiene 6 zugewandte Seitenfläche 8 des Blechprofils 2 der Seitenzarge 1 ist in dem an der Ladenschiene 6 befestigten Zustand bereichsweise direkt zwischen dem seitlichen Steg 28 und dem weiteren seitlichen Steg 30 - in orthogonaler Richtung auf den seitlichen Steg 28 oder den weiteren seitlichen Steg 30 - angeordnet.

Im Detailausschnitt ist die Koppelung zwischen der Seitenzarge 1 und der Ladenschiene 6 vergrößert dargestellt, wobei die Koppelvorrichtung 5 des Frontwandhalters 4 (oder gegebenenfalls des Blechprofils 2) in eine zu der Koppelvorrichtung 5 korrespondierende Koppeleinrichtung 33 in Form einer Aussparung oder Nut der Ladenschiene 6 eingreift.

Die Koppelvorrichtung 5 umfasst eine abgestufte Kontur, welche einen Koppelvorgang oder einen Entkoppelungsvorgang zwischen Seitenzarge 1 und Ladenschiene 6 begünstigt.

Die Seitenzarge 1 ist direkt zwischen dem seitlichen Steg 28 der Korpusschiene 23 zur Verbindung der Korpusschiene 23 mit dem Behältnis 29 und dem parallel dazu angeordneten weiteren seitlichen Steg 30 der Ladenschiene 6 angeordnet.

Eine Kraftübertragung bei vertikaler oder lateraler Belastung der Anordnung in dem Gebrauchszustand 21 der Anordnung ist unmittelbar und behältnisschienenlos zwischen der Seitenzarge 1 und der Ladenschiene 6 vermittelbar.

## Patentansprüche

1. Seitenzarge (1) in Form einer Behältnisseitenwand, insbesondere Schubladenseitenwand, umfassend
- wenigstens einen Rückwandhalter (3) und/oder wenigstens einen Frontwandhalter (4) und
- ein, vorzugsweise einstückiges, gebogenes Blechprofil (2) in Form eines Zargenhuts zur Aufnahme des wenigstens einen Rückwandhalters (3) und/oder des wenigstens einen Frontwandhalters (4),
wobei der wenigstens eine Rückwandhalter (3) und/oder der wenigstens eine Frontwandhalter (4) zumindest bereichsweise innerhalb des Blechprofils (2) angeordnet ist,
**dadurch gekennzeichnet, dass** das Blechprofil (2) mit dem wenigstens einen Frontwandhalter (4) und/oder mit dem wenigstens einen Rückwandhalter (3) an zumindest einem Verbindungspunkt (19) durch wenigstens eine Verhalsung (20) verhalst ist, wobei sich die wenigstens eine Verhalsung zumindest bereichsweise in wenigstens eine Verhalsungsöffnung des wenigstens einen Frontwandhalters und/ oder des wenigstens einen Rückwandhalters hinweg erstreckt,
wobei Material des Blechprofils (2) an die wenigstens eine Verhalsungsöffnung (36) gepresst ist, sodass eine kraftschlüssige Verbindung entlang der wenigstens einen Verhalsungsöffnung (36) und/oder eine formschlüssige Verbindung orthogonal auf die wenigstens eine Verhalsungsöffnung (36) gebildet ist.

2. Seitenzarge (1) nach Anspruch 1, wobei
- das Blechprofil (2) mit dem wenigstens einen Frontwandhalter (4) und/oder mit dem wenigstens einen Rückwandhalter (3) an einer Vielzahl an Verbindungspunkten (19) durch eine Verhalsung (20) verhalst ist und/oder
- die wenigstens eine Verhalsung (20) an einer, vorzugsweise in einem Gebrauchszustand (21) der Seitenzarge (1) einer Ladenschiene (6) und/oder einem Behältnisboden (7) zugewandten, Seitenfläche (8) des Blechprofils (2) und/oder an einer in einem Gebrauchszustand (21) der Seitenzarge (1) verorteten, vorzugsweise an die Seitenfläche (8) angrenzenden, Unterseite (22) des Blechprofils (2) angeordnet ist.

3. Seitenzarge (1) nach einem der vorangehenden Ansprüche,
wobei
- der wenigstens eine Frontwandhalter (4) und/oder der wenigstens eine Rückwandhalter (3) im Wesentlichen aus Kunststoff ausgebildet ist, wobei die wenigstens eine Verhalsung (20) zwischen dem Kunststoff und Metall des Blechprofils (2) vorliegt, wobei vorzugsweise vorgesehen ist, dass der wenigstens eine Frontwandhalter (4) und/oder der wenigstens eine Rückwandhalter (3) wenigstens ein Verbindungsmittel (39) für eine Behältnisfront (24) und/oder eine Behältnisrückwand (25), besonders bevorzugt aus Metall, umfasst, und/oder
- die wenigstens eine Verhalsung (20) einen im Wesentlichen kreisförmigen Querschnitt (40) aufweist und/oder sich die wenigstens eine Verhalsung (20) vollständig über eine Materialstärke des Blechprofils (2) erstreckt und/oder die wenigstens eine Verhalsung (20) durch Material des Blechprofils (2) in Kontaktierung mit Material des wenigstens einen Frontwandhalters (4) und/oder des wenigstens einen Rückwandhalter (3) gebildet ist.

4. Seitenzarge (1) nach einem der vorangehenden Ansprüche, vorgesehen ist, dass eine Tiefe (37) der wenigstens eine Verhalsung (20) zwischen 5% und 80%, besonders bevorzugt zwischen 10% und 50%, weiter besonders bevorzugt zwischen 20% und 30%, einer Verhalsungsöffnungstiefe (38) beträgt.

5. Seitenzarge (1) nach einem der vorangehenden Ansprüche, wobei das Blechprofil (2) an einer Seitenfläche (8) des Blechprofils (2) eine nutförmige Profilierung (9), vorzugsweise mit im Wesentlichen rechteckigem Querschnitt (10), umfasst, welche dazu ausgebildet ist, einen Behältnisboden (7) aufzunehmen, wobei bevorzugt vorgesehen ist, dass in der Profilierung (9) wenigstens ein Befestigungsmittel (11), vorzugsweise in Form wenigstens eines Widerhakens (12), besonders bevorzugt mit zwei Zacken (13), zur Verbindung des Behältnisbodens (7) mit dem Blechprofil (2) und/oder zur Sicherung des Behältnisbodens (7) an dem Blechprofil (2) umfasst, wobei vorzugsweise vorgesehen ist, dass das wenigstens eine Befestigungsmittel (11) stoffschlüssig mit dem Blechprofil (2) verbunden ist und/oder aus der Profilierung (9) ausgestanzt ist und/oder quer in die Profilierung (9) ragt. und/oder des wenigstens einen Rückwandhalters (3) gebildet ist.

6. Seitenzarge (1) nach einem der vorangehenden Ansprüche, wobei
- der wenigstens eine Frontwandhalter (4) und/oder der wenigstens eine Rückwandhalter (3) in Form eines Winkels (17) zum Einschieben in das Blechprofil (2), vorzugsweise über eine zu einer gegebenenfalls vorhandenen Profilierung (9) des Blechprofils (2) korrespondierenden Vertiefung (18) des wenigstens einen Frontwandhalters (4) und/oder des wenigstens einen Rückwandhalters (3), ausgebildet ist und/oder
- wenigstens ein Stabilisierungselement (14) vorgesehen ist, welches, vorzugsweise in Längserstreckung (15) der Seitenzarge (1) mittig und/oder vollständig, zumindest bereichsweise innerhalb des Blechprofils (2) zur Erhöhung einer Steifigkeit und/oder Festigkeit der Seitenzarge (1) angeordnet ist, wobei vorzugsweise vorgesehen ist, dass das wenigstens eine Stabilisierungselement (14) über eine zu einer gegebenenfalls vorhandenen Profilierung (9) des Blechprofils (2) korrespondierenden Vertiefung (18) des wenigstens einen Stabilisierungselements (14) in das Blechprofil (2) einschiebbar ist,
und/oder
- eine Breite (16) des Blechprofils (2) zwischen 3 mm und 10 mm, vorzugsweise zwischen 4 mm und 6 mm, liegt und/oder
- der wenigstens eine Frontwandhalter (4) und/oder das Blechprofil (2) wenigstens eine Koppelvorrichtung (5) zur unmittelbaren, vorzugsweise behältnisschienenlosen, Koppelung mit einer Ladenschiene (6) umfasst.

7. Anordnung aus wenigstens einer Korpusschiene (23) mit einem seitlichen Steg (28) zur Verbindung der wenigstens einen Korpusschiene (23) mit einem Möbelkorpus, wenigstens einer, insbesondere quaderförmigen, Ladenschiene (6) mit einem im Gebrauchszustand (21) der Anordnung im Wesentlichen parallel zu dem seitlichen Steg (28) orientierten weiteren seitlichen Steg (30) und wenigstens einer Seitenzarge (1) nach einem der vorangehenden Ansprüche, wobei die wenigstens eine Seitenzarge (1) über die wenigstens eine Ladenschiene (6) relativ zu der wenigstens einen Korpusschiene (23) verschiebbar gelagert ist.

8. Anordnung nach Anspruch 7, wobei
- die wenigstens eine Seitenzarge (1), vorzugsweise die Seitenfläche (8) des Blechprofils (2), in einem an der wenigstens einen Ladenschiene (6) befestigten Zustand zumindest bereichsweise direkt zwischen dem seitlichen Steg (28) und dem weiteren seitlichen Steg (30) angeordnet ist und/oder
- die wenigstens eine Ladenschiene (6) eine im Wesentlichen orthogonal zu dem weiteren seitlichen Steg (30) ausgerichtete, vorzugsweise an den weiteren seitlichen Steg (30) angrenzende, Auflagefläche (34) zur unmittelbaren Abstützung eines Behältnisboden (7) im Gebrauchszustand (21) der Anordnung umfasst, wobei vorzugsweise vorgesehen ist, dass die Auflagefläche (34) im Gebrauchszustand (21) der Anordnung in vertikaler Richtung (35) von oben, besonders bevorzugt zumindest bereichsweise und/oder im Bereich eines Kontaktierungsareals für den Behältnisboden (7), frei zugänglich ist, und/oder
- genau ein Blechprofil (2) zur direkten Verbindung mit der Ladenschiene (6) und/oder einem Behältnisboden (7) vorgesehen ist und/oder
- die wenigstens eine Seitenzarge (1) durch wenigstens eine Koppelvorrichtung (5) des Blechprofils (2) und/oder des wenigstens einen Frontwandhalters (4) unmittelbar durch Kontaktierung, vorzugsweise behältnisschienenlos, mit der wenigstens eine Ladenschiene (6) gekoppelt ist.

9. Anordnung nach Anspruch 7 oder 8, wobei die Anordnung wenigstens einen Behältnisboden (7) umfasst, welcher das Blechprofil (2) direkt, vorzugsweise behältnisschienenlos und/oder über eine nutförmige Profilierung (9) einer Seitenfläche (8) des Blechprofils (2) zur Aufnahme des wenigstens einen Behältnisbodens (7), kontaktiert, wobei vorzugsweise vorgesehen ist, dass der wenigstens eine Behältnisboden (7) an dem Blechprofil (2) über wenigstens ein Befestigungsmittel (11) gesichert ist, wobei besonders bevorzugt vorgesehen ist, dass der wenigstens eine Behältnisboden (7) im Wesentlichen bündig zu der wenigstens einen Ladenschiene (6) angeordnet ist, wobei vorzugsweise vorgesehen ist, dass der wenigstens eine Behältnisboden (7) flächig auf der wenigstens einen Ladenschiene (6) aufliegt.

10. Anordnung nach einem der Ansprüche 7 bis 9, wobei die Anordnung wenigstens eine Behältnisrückwand (25) umfasst, welche an dem wenigstens einen Rückwandhalter (3) angeordnet ist.

11. Anordnung nach einem der Ansprüche 7 bis 10, wobei eine Kraftübertragung bei, vorzugsweise vertikaler und/oder lateraler, Belastung der Anordnung in einem Gebrauchszustand (21) der Anordnung unmittelbar, vorzugsweise behältnisschienenlos, zwischen der wenigstens einen Seitenzarge (1), vorzugsweise dem Blechprofil (2) und/oder dem wenigstens einen Frontwandhalter (4) und/oder dem wenigstens einen Rückwandhalter (3), und der wenigstens einen Ladenschiene (6) vermittelbar ist.

12. Möbel, insbesondere Schublade (31), mit wenigstens einem Möbelkorpus und wenigstens einer Seitenzarge (1) nach einem der Ansprüche 1 bis 6, vorzugsweise wenigstens einer Anordnung nach einem der Ansprüche 7 bis 11.

13. Verfahren zur Herstellung einer Seitenzarge (1) nach einem der Ansprüche 1 bis 6, **gekennzeichnet durch** die folgenden, insbesondere in chronologischer Reihenfolge durchzuführenden, Verfahrensschritte:
- das Blechprofil (2) und der wenigstens eine Frontwandhalter (4) und/oder der wenigstens eine Rückwandhalter (3) werden bereitgestellt, wobei der wenigstens eine Frontwandhalter (4) und/oder der wenigstens eine Rückwandhalter (3) und gegebenenfalls wenigstens ein Stabilisierungselement (14) in das Blechprofil (2) der Seitenzarge (1) eingeschoben wird, und
- das Blechprofil (2) wird mit dem wenigstens einen Frontwandhalter (4) und/oder mit dem wenigstens einen Rückwandhalter (3) an zumindest einem Verbindungspunkt (19) durch wenigstens eine Verhalsung (20) verhalst.

14. Verfahren nach Anspruch 13, wobei
- in einem vorbereitenden Verfahrensschritt wenigstens eine Verhalsungsöffnung (20) in den wenigstens einen Frontwandhalter (4) und/oder den wenigstens einen Rückwandhalter (3) eingebracht wird, wobei die wenigstens eine Verhalsung (20) zwischen Kunststoff des wenigstens einem Frontwandhalters (4) und/oder des wenigstens einen Rückwandhalters (3) und Metall des Blechprofils (2), vorzugsweise mit im Wesentlichen kreisförmigen Querschnitt (40), gebildet ist, wobei sich die wenigstens eine Verhalsung (20) zumindest bereichsweise in der wenigstens einen Verhalsungsöffnung (36) des wenigstens einen Frontwandhalters (4) und/oder des wenigstens einen Rückwandhalters (3) hinweg erstreckt, und/oder
- die wenigstens eine Verhalsung (20), vorzugsweise automatisiert, durch wenigstens einen Stempel (41) oder Stift eingebracht wird, wobei vorzugsweise vorgesehen ist, dass das Blechprofil (2) mit dem wenigstens einen Frontwandhalter (4) und/oder mit dem wenigstens einen Rückwandhalter (3) an einer Vielzahl an Verbindungspunkten (19) durch eine Verhalsung (20), besonders bevorzugt an einer Seitenfläche (8) des Blechprofils (2) und/oder an einer in einem Gebrauchszustand (21) der Seitenzarge (1) verorteten Unterseite (22) des Blechprofils (2) angeordnet, verhalst ist.

## Claims

1. A side panel (1) in the form of a container side wall, in particular a drawer side wall, comprising
- at least one rear wall holder (3) and/or at least one front wall holder (4) and
- a, preferably one-piece, bent sheet profile (2) in the form of a panel hat for receiving the at least one rear wall holder (3) and/or the at least one front wall holder (4),
wherein the at least one rear wall holder (3) and/or the at least one front wall holder (4) is arranged at least in regions within the sheet profile (2),
**characterized in that** the sheet profile (2) is collared to the at least one front wall holder (4) and/or to the at least one rear wall holder (3) at at least one connection point (19) by means of at least one collar (20), wherein the at least one collar (20) extends at least in regions into at least one collar opening (36) of the at least one front wall holder (4) and/or the at least one rear wall holder (3), wherein material of the sheet profile (2) is pressed against the at least one collar opening (36) so that a force-fitting connection along the at least one collar opening (26) and/or a form-fitting connection orthogonal to the at least one collar opening is formed.

2. The side panel (1) according to claim 1, wherein
- the sheet profile (2) is connected to the at least one front wall holder (4) and/or to the at least one rear wall holder (3) at multiple connection points (19) by a collar (20) and/or
- the at least one collar (20) is arranged on a side surface (8) of the sheet profile (2), preferably facing a drawer rail (6) and/or a container base (7) in a state of use (21) of the side panel (1), and/or on an underside (22) of the sheet profile (2) located in a state of use (21) of the side panel (1), preferably adjacent to the side surface (8).

3. The side panel (1) according to any one of the preceding claims, wherein
- the at least one front wall holder (4) and/or the at least one rear wall holder (3) is essentially made of plastic, wherein the at least one collar (20) is present between the plastic and metal of the sheet metal profile (2), wherein it is preferably provided that the at least one front wall holder (4) and/or the at least one rear wall holder (3) comprises at least one connecting means (39) for a container front (24) and/or a container rear wall (25), particularly preferably made of metal, and/or
- the at least one collar (20) has a substantially circular cross-section (40) and/or the at least one collar (20) extends completely over a material thickness of the sheet profile (2) and/or the at least one collar (20) is formed by material of the sheet profile (2) in contact with material of the at least one front wall holder (4) and/or the at least one rear wall holder (3).

4. The side panel (1) according to any one of the preceding claims, wherein it is provided that a depth (37) of the at least one collar (20) is between 5% and 80%, particularly preferably between 10% and 50%, further particularly preferably between 20% and 30%, of a collar opening depth (38).

5. The side panel (1) according to any one of the preceding claims, wherein the sheet profile (2) comprises a groove-shaped profiling (9), preferably with a substantially rectangular cross-section (10), on a side surface (8) of the sheet profile (2), which profiling is designed to receive a container base (7), wherein it is preferably provided that the profiling (9) comprises at least one fastening means (11), preferably in the form of at least one barb (12), particularly preferably with two prongs (13), for connecting the container base (7) to the sheet profile (2) and/or for securing the container base (7) to the sheet profile (2), wherein it is preferably provided that the at least one fastening means (11) is materially connected to the sheet profile (2) and/or is punched out of the profiling (9) and/or protrudes transversely into the profiling (9).

6. The side panel (1) according to any one of the preceding claims, wherein
- the at least one front wall holder (4) and/or the at least one rear wall holder (3) is designed in the form of a bracket (17) for insertion into the sheet profile (2), preferably via a recess (18) of the at least one front wall holder (4) and/or the at least one rear wall holder (3), the recess corresponding to an optional profiling (9) of the sheet profile (2), and/or
- at least one stabilizing element (14) is provided, which is arranged, preferably in the longitudinal extension (15) of the side panel (1) centrally and/or completely, at least in regions within the sheet profile (2) for increasing a rigidity and/or strength of the side panel (1), wherein it is preferably provided that the at least one stabilizing element (14) can be inserted into the sheet profile (2) via a recess (18) of the at least one stabilizing element (14) corresponding to an optional profiling (9) of the sheet profile (2), and/or
- a width (16) of the sheet profile (2) is between 3 mm and 10 mm, preferably between 4 mm and 6 mm, and/or
- the at least one front wall holder (4) and/or the sheet profile (2) comprises at least one coupling device (5) for direct coupling to a drawer rail (6), preferably without container rail.

7. An arrangement of at least one body rail (23) with a lateral web (28) for connecting the at least one body rail (23) to a furniture body, at least one, in particular cuboid-shaped, drawer rail (6) with a further lateral web (30) oriented substantially parallel to the lateral web (28) in the use state (21) of the arrangement and at least one side panel (1) according to any one of the preceding claims, wherein the at least one side panel (1) is mounted displaceably relative to the at least one body rail (23) via the at least one drawer rail (6).

8. The arrangement according to claim 7, wherein
- the at least one side panel (1), preferably the side surface (8) of the sheet profile (2), in a state fastened to the at least one drawer rail (6), is arranged at least in regions directly between the lateral web (28) and the further lateral web (30), and/or
- the at least one drawer rail (6) comprises a support surface (34), which is aligned substantially orthogonally to the further lateral web (30) and preferably adjoins the further lateral web (30), for directly supporting a container base (7) in the state of use (21) of the arrangement, wherein it is preferably provided that the support surface (34) is freely accessible in the vertical direction (35) from above, particularly preferably at least in regions and/or in the region of a contacting area for the container base (7), in the state of use (21) of the arrangement, and/or
- exactly one sheet profile (2) is provided for direct connection to the drawer rail (6) and/or a container base (7), and/or
- the at least one side panel (1) is coupled to the at least one drawer rail (6) by at least one coupling device (5) of the sheet profile (2) and/or of the at least one front wall holder (4) directly by contact, preferably without container rails.

9. The arrangement according to any one of claims 7 or 8, wherein the arrangement comprises at least one container base (7) which contacts the sheet profile (2) directly, preferably without container rails and/or via a groove-shaped profiling (9) of a side surface (8) of the sheet profile (2) for receiving the at least one container base (7), wherein it is preferably provided that the at least one container base (7) is secured to the sheet profile (2) via at least one fastening means (11), wherein it is particularly preferably provided that the at least one container base (7) is arranged substantially flush with the at least one drawer rail (6), wherein it is preferably provided that the at least one container base (7) rests flat on the at least one drawer rail (6).

10. The arrangement according to any one of claims 7 to 9, wherein the arrangement comprises at least one container rear wall (25) which is arranged on the at least one rear wall holder (3).

11. The arrangement according to any one of claims 7 to 10, wherein a force transmission in the case of preferably vertical and/or lateral loading of the arrangement in a state of use (21) of the arrangement can be provided directly, preferably without container rails, between the at least one side panel (1), preferably the sheet profile (2) and/or the at least one front wall holder (4) and/or the at least one rear wall holder (3), and the at least one drawer rail (6).

12. A piece of furniture, in particular a drawer (31), with at least one furniture body and at least one side panel (1) according to any one of claims 1 to 6, preferably at least one arrangement according to any one of claims 7 to 11.

13. A method for producing a side panel (1) according to any one of claims 1 to 6, **characterized by** the following steps, which are to be carried out in particular in chronological order:
- the sheet profile (2) and the at least one front wall holder (4) and/or the at least one rear wall holder (3) are provided, wherein the at least one front wall holder (4) and/or the at least one rear wall holder (3) and optionally at least one stabilizing element (14) are inserted into the sheet profile (2) of the side panel (1), and
- the sheet profile (2) is collared to the at least one front wall holder (4) and/or to the at least one rear wall holder (3) at at least one connection point (19) by means of at least one collar (20).

14. The method according to claim 13, wherein
- in a preparatory step at least one collar opening (20) is introduced into the at least one front wall holder (4) and/or the at least one rear wall holder (3), wherein the at least one collar (20) is formed between a plastic of the at least one front wall holder (4) and/or the at least one rear wall holder (3) and a metal of the sheet profile (2), preferably with a substantially circular cross-section (40), wherein the at least one collar (20) extends at least partially in the at least one collar opening (36) of the at least one front wall holder (4) and/or the at least one rear wall holder (3), and/or
- the at least one collar (20) is introduced, preferably automatically, by at least one punch (41) or pin, wherein it is preferably provided that the sheet profile (2) is collared to the at least one front wall holder (4) and/or to the at least one rear wall holder (3) at multiple connection points (19) by a collar (20), particularly preferably arranged on a side surface (8) of the sheet profile (2) and/or on an underside (22) of the sheet profile (2) located in a state of use (21) of the side panel (1).

## Revendications

1. Châssis latéral (1) sous la forme d'une paroi latérale de récipient, en particulier paroi latérale de tiroir, comprenant
- au moins un support de paroi arrière (3) et/ou au moins un support de paroi avant (4) et
- un profilé en tôle (2) cintré, de préférence monobloc, sous la forme d'un chapeau de châssis pour recevoir l'au moins un support de paroi arrière (3) et/ou de l'au moins un support de paroi avant (4),
dans lequel l'au moins un support de paroi arrière (3) et/ou l'au moins un support de paroi avant (4) sont disposés au moins par endroits à l'intérieur du profilé en tôle (2),
**caractérisé en ce que** le profilé en tôle (2) est serti avec l'au moins un support de paroi avant (4) et/ou avec l'au moins un support de paroi arrière (3) sur au moins un point de liaison (19) par au moins une liaison par sertissage (20), dans lequel l'au moins une liaison par sertissage s'étend au moins par endroits dans au moins une ouverture de liaison par sertissage de l'au moins un support de paroi avant et/ou de l'au moins un support de paroi arrière, dans lequel le matériau du profilé en tôle (2) est pressé sur l'au moins une ouverture de liaison par sertissage (36) si bien que sont formées une liaison à force le long de l'au moins une ouverture de liaison par sertissage (36) et/ou une liaison à complémentarité de forme orthogonalement à l'au moins une ouverture de liaison par sertissage (36).

2. Châssis latéral (1) selon la revendication 1, dans lequel
- le profilé en tôle (2) avec l'au moins un support de paroi avant (4) et/ou avec l'au moins un support de paroi arrière (3) est serti sur une pluralité de points de liaison (19) par une liaison par sertissage (20) et/ou
- l'au moins une liaison par sertissage (20) est disposée sur une surface latérale (8) du profilé en tôle (2) tournée vers un rail de tiroir (6) et/ou un fond de récipient (7), de préférence dans un état d'utilisation (21) du châssis latéral (1), et/ou sur un côté inférieur (22) du profilé en tôle (2) situé dans un état d'utilisation (21) du châssis latéral (1), de préférence adjacent à la surface latérale (8).

3. Châssis latéral (1) selon l'une quelconque des revendications précédentes, dans lequel
- l'au moins un support de paroi avant (4) et/ou l'au moins un support de paroi arrière (3) sont réalisés sensiblement en matière plastique, dans lequel l'au moins une liaison par sertissage (20) entre le plastique et le métal du profilé en tôle (2) est présente, dans lequel il est de préférence prévu que l'au moins un support de paroi avant (4) et/ou l'au moins un support de paroi arrière (3) comprennent au moins un moyen de liaison (39) pour une partie avant de récipient (24) et/ou une paroi arrière de récipient (25), de manière particulièrement préférée en métal, et/ou
- l'au moins une liaison par sertissage (20) présente une section transversale (40) sensiblement circulaire et/ou l'au moins une liaison par sertissage (20) s'étend entièrement sur une épaisseur de matériau du profilé de tôle (2) et/ou l'au moins une liaison par sertissage (20) est formée par un matériau du profilé en tôle (2) en contact avec un matériau de l'au moins un support de paroi avant (4) et/ou de l'au moins un support de paroi arrière (3).

4. Châssis latéral (1) selon l'une quelconque des revendications précédentes, dans lequel il est prévu qu'une profondeur (37) de l'au moins une liaison par sertissage (20) est comprise entre 5 % et 80 %, de manière particulièrement préférée entre 10 % et 50 %, de manière davantage préférée entre 20 % et 30 %, d'une profondeur d'ouverture de liaison par sertissage (38).

5. Châssis latéral (1) selon l'une quelconque des revendications précédentes, dans lequel le profilé en tôle (2) comprend sur une surface latérale (8) du profilé en tôle (2) un profilage (9) en forme de rainure, de préférence avec une section transversale (10) sensiblement rectangulaire, qui est réalisée pour recevoir un fond de récipient (7), dans lequel il est de préférence prévu que le profilé (9) comprend au moins un moyen de fixation (11), de préférence sous la forme d'au moins un crochet (12), de manière particulièrement préférée avec deux dents (13), pour la liaison du fond de récipient (7) au profilé en tôle (2) et/ou pour le blocage du fond de récipient (7) sur le profilé en tôle (2), dans lequel il est de préférence prévu que l'au moins un moyen de fixation (11) est relié par liaison de matière au profilé en tôle (2) et/ou est découpé du profilé (9) et/ou dépasse transversalement dans le profilé (9).

6. Châssis latéral (1) selon l'une quelconque des revendications précédentes, dans lequel
- l'au moins un support de paroi avant (4) et/ou l'au moins un support de paroi arrière (3) sont réalisés sous la forme d'une équerre (17) pour l'insertion dans le profilé en tôle (2), de préférence par un renfoncement (18) correspondant à un profilage (9) éventuellement existant du profilé en tôle (2) de l'au moins un support de paroi avant (4) et/ou de l'au moins un support de paroi arrière (3), et/ou
- au moins un élément de stabilisation (14) est prévu, lequel est disposé, de préférence dans l'extension longitudinale (15) du châssis latéral (1) au centre et/ou complètement, au moins par endroits à l'intérieur du profilé en tôle (2) pour augmenter une rigidité et/ou une résistance du châssis latéral (1), dans lequel il est de préférence prévu que l'au moins un élément de stabilisation (14) peut être inséré dans le profilé en tôle (2) par un renfoncement (18) correspondant à un profilage (9) éventuellement existant du profilé en tôle (2) de l'au moins un élément de stabilisation (14), et/ou
- une largeur (16) du profilé en tôle (2) se situe entre 3 mm et 10 mm, de préférence entre 4 mm et 6 mm, et/ou
- l'au moins un support de paroi avant (4) et/ou le profilé en tôle (2) comprennent au moins un dispositif de couplage (5) pour le couplage direct, de préférence sans rail de récipient, à un rail de tiroir (6).

7. Ensemble composé d'au moins un rail de corps (23) avec une entretoise latérale (28) pour relier l'au moins un rail de corps (23) à un corps de meuble, d'au moins un rail de volet (6), en particulier de forme carrée, avec une autre entretoise latérale (30) orientée sensiblement parallèlement à l'entretoise latérale (28) dans l'état d'utilisation (21) de l'ensemble et d'au moins un châssis latéral (1) selon l'une quelconque des revendications précédentes, dans lequel l'au moins un châssis latéral (1) est monté de manière coulissante par rapport à l'au moins un rail de corps (23) par l'au moins un rail de tiroir (6).

8. Ensemble selon la revendication 7, dans lequel
- l'au moins un châssis latéral (1), de préférence la surface latérale (8) du profilé en tôle (2), est disposé dans un état fixé sur l'au moins un rail de volet (6) au moins par endroits directement entre l'entretoise latérale (28) et l'autre entretoise latérale (30) et/ou
- l'au moins un rail de tiroir (6) comprend une surface d'appui (34) orientée sensiblement orthogonalement à l'autre entretoise latérale (30), de préférence adjacente à l'autre entretoise latérale (30), pour le support direct d'un fond de récipient (7) dans l'état d'utilisation (21) de l'agencement, dans lequel il est de préférence prévu que la surface d'appui (34) dans l'état d'utilisation (21) de l'ensemble soit accessible librement dans la direction verticale (35) depuis le haut, de manière particulièrement préférée au moins par endroits et/ou dans la zone d'une zone de contact pour le fond du récipient (7), et/ou
- exactement un profilé en tôle (2) est prévu pour une liaison directe avec le rail de tiroir (6) et/ou un fond de récipient (7) et/ou
- l'au moins un châssis latéral (1) est couplé directement par contact, de préférence sans rail de récipient, avec l'au moins un rail de tiroir (6) par au moins un dispositif de couplage (5) du profilé en tôle (2) et/ou de l'au moins un support de paroi avant (4).

9. Ensemble selon la revendication 7 ou 8, dans lequel l'ensemble comprend au moins un fond de récipient (7), lequel contacte le profilé en tôle (2) directement, de préférence sans rail de récipient et/ou par un profilage en forme de rainure (9) d'une surface latérale (8) du profilé en tôle (2) pour recevoir l'au moins un fond de récipient (7), dans lequel il est de préférence prévu que l'au moins un fond de récipient (7) est bloqué sur le profilé en tôle (2) par au moins un moyen de fixation (11), dans lequel il est prévu de manière particulièrement préférée que l'au moins un fond de récipient (7) est disposé sensiblement à fleur par rapport à l'au moins un rail de tiroir (6), dans lequel il est prévu de préférence que l'au moins un fond de récipient (7) repose à plat sur l'au moins un rail de tiroir (6).

10. Ensemble selon l'une quelconque des revendications 7 à 9, dans lequel l'ensemble comprend au moins une paroi arrière de récipient (25), laquelle est disposée sur l'au moins un support de paroi arrière (3).

11. Ensemble selon l'une quelconque des revendications 7 à 10, dans lequel une transmission de force lors d'une sollicitation, de préférence verticale et/ou latérale, de l'ensemble dans un état d'utilisation (21) de l'ensemble est directement, de préférence sans rail de récipient, communiquée entre l'au moins un châssis latéral (1), de préférence le profilé en tôle (2) et/ou l'au moins un support de paroi avant (4) et/ou l'au moins un support de paroi arrière (3), et l'au moins un rail de tiroir (6).

12. Meuble, en particulier tiroir (31), avec au moins un corps de meuble et au moins un châssis latéral (1) selon l'une quelconque des revendications 1 à 6, de préférence au moins un ensemble selon l'une quelconque des revendications 7 à 11.

13. Procédé de fabrication d'un châssis latéral (1) selon l'une quelconque des revendications 1 à 6, **caractérisé par** les étapes de procédé suivantes, à mettre en œuvre en particulier dans l'ordre chronologique :
- le profilé en tôle (2) et l'au moins un support de paroi avant (4) et/ou l'au moins un support de paroi arrière (3) sont fournis, dans lequel l'au moins un support de paroi avant (4) et/ou l'au moins un support de paroi arrière (3) et, le cas échéant, au moins un élément de stabilisation (14) sont insérés dans le profilé en tôle (2) du châssis latéral (1), et
- le profilé en tôle (2) est serti avec l'au moins un support de paroi avant (4) et/ou avec l'au moins un support de paroi arrière (3) sur au moins un point de liaison (19) par au moins une liaison par sertissage (20).

14. Procédé selon la revendication 13, dans lequel
- dans une étape de procédé de préparation, au moins une ouverture de liaison par sertissage (20) est ménagée dans l'au moins un support de paroi avant (4) et/ou l'au moins un support de paroi arrière (3), dans lequel l'au moins une liaison par sertissage (20) est formée entre le plastique de l'au moins un support de paroi avant (4) et/ou de l'au moins un support de paroi arrière (3) et le métal du profilé en tôle (2), de préférence avec une section transversale (40) sensiblement circulaire, dans lequel l'au moins une liaison par sertissage (20) s'étend au moins par endroits dans l'au moins une ouverture de liaison par sertissage (36) de l'au moins un support de paroi avant (4) et/ou de l'au moins un support de paroi arrière (3), et/ou
- l'au moins une liaison par sertissage (20) est ménagée, de préférence de manière automatisée, par au moins un poinçon (41) ou une goupille, dans lequel il est de préférence prévu que le profilé en tôle (2) est serti avec l'au moins un support de paroi avant (4) et/ou avec l'au moins un support de paroi arrière (3) sur une pluralité de points de liaison (19) par une liaison par sertissage (20), de manière particulièrement préférée sur une surface latérale (8) du profilé en tôle (2) et/ou sur un côté inférieur (22) du profilé en tôle (2) situé dans un état d'utilisation (21) du châssis latéral (1).
